**Europäisches Patentamt**

**European Patent Office**

**Office européen des brevets**

(19)

(11) **EP 1 021 043 A2**

(12) # EUROPEAN PATENT APPLICATION

(43) Date of publication:
**19.07.2000 Bulletin 2000/29**

(51) Int Cl.⁷: **H04N 7/30**, H04N 7/26

(21) Application number: **99102870.5**

(22) Date of filing: **03.03.1999**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI** | (72) Inventors:<br>• **Chung, Jae Won**<br>  **Kangseo-ku, Seoul, 157-200 (KR)**<br>• **Moon, Joo Hee**<br>  **Kooi-dong, Kwangjin-ku, Seoul, 133-200 (KR)** |
| (30) Priority: **15.01.1999 KR 9900961** | (74) Representative:<br>**Troesch Scheidegger Werner AG**<br>**Patentanwälte,**<br>**Siewerdtstrasse 95,**<br>**Postfach**<br>**8050 Zürich (CH)** |
| (71) Applicant: **Hyundai Electronics Industries Co., Ltd.**<br>**Ichon-kun, Kyounki-do 467-860 (KR)** | |

(54) **Object-based coding and decoding apparatuses and methods for image signals**

(57) An object-based coding apparatus and method for image signals, wherein coding of an input image signal, which is performed in such a fashion that upon scanning shape-adaptive transform coefficients of the input video signal transformed in accordance with a shape-adaptive transform for an object-based coding thereof, only segments containing such shape-adaptive transform coefficients are scanned, is carried out using reconstructed shape information. Shape information contained in an input image signal and associated with objects is encoded and thus reconstructed. Texture information contained in the input image signal is processed by a shape-adaptive transform, based on the reconstructed shape information. Based on the processed texture information, a coefficient mask is formed. The formation of the coefficient mask is carried out independently of and in parallel to the shape-adaptive coding process during the execution of the shape-adaptive coding process. Accordingly, an improvement in decoding speed is achieved. It is also possible to form an accurate coefficient mask. An apparatus for and a method of object-based decoding of image signals are also disclosed which can decode bitstream generated using the coding method, thereby reproducing image signals.

【Fig.14】

EP 1 021 043 A2

**Description**

BACKGROUND OF THE INVENTION

Field of the Invention

The present invention relates to image signal coding and decoding, and more particularly to an apparatus for and a method of coding image signals, wherein upon scanning transform coefficients of an input image signal in a shape-adaptive transform, only segments containing such shape-adaptive transform coefficients are scanned while segments containing no shape-adaptive transform coefficient are skipped. In particular, the present invention relates to a compressive coding apparatus and method for image signals capable of coding shape information of an object contained in an input image signal, and controlling a scanning operation, based on the shape information, thereby achieving an improvement in the coding efficiency. The present invention also relates to an image signal decoding apparatus and method wherein a bitstream encoded in the above-mentioned manner are decoded, thereby recovering an original image signal.

Description of the Prior Art

Compressive coding and decoding of image signals make it possible to achieve transmission of image information while reducing the memory capacity required to store image signals. Thus, such compressive coding and decoding techniques are very important techniques in multimedia industries involving applications of image signals such as storage and transmission of image signals.

Meanwhile, a standardization for information compression schemes has been necessary for the extension of multimedia industries and information compatibility. To this end, a variety of image standardization schemes associated with a variety of applications have been proposed. For example, as representative image coding and decoding standardization schemes, there are H.261 of International Telecommunication Union - Telecommunication Standardization Sector (ITU-T, the successor of CCITT) for video phone or video conference services using integrated services digital networks (ISDNs), and H.263 of ITU-T for transmission of image information using public switched telephone networks (PSTNs), MPEG-1 proposed by Moving Picture Experts Group (MPEG) of International Standardization Organization/International Electrotechnical Commission Joint Technical Committee 1/Sub Committee 29/Working Group 11 (ISO/IEC JTC1/SC29/WG11) for storage of an image, and MPEG-2 proposed by MPEG of ISO/IEC JTC1/SC29/WG11 for high-quality digital broadcasting associated with high definition televisions (HDTVs). Standardization for compressive coding of still-image signals also has been made. Joint Photographic Coding Experts Group (JPEG) of ISO/IEC JTC1/SC29/WG1 is a representative standardization method.

In such conventional image signal coding schemes, the entire portion of a rectangular frame or picture is encoded. Such schemes are called "frame-based coding". In such image signal coding schemes, texture information of all pixels included in a frame, namely, luminance and chrominance, is encoded and transmitted.

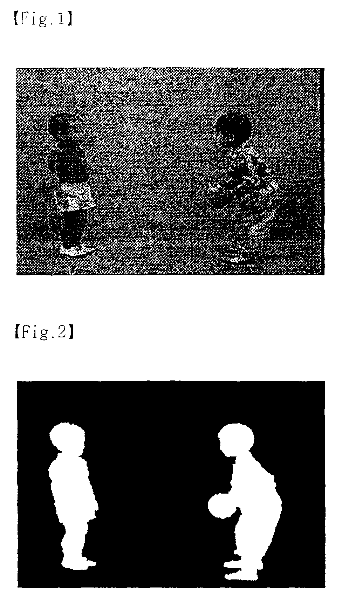

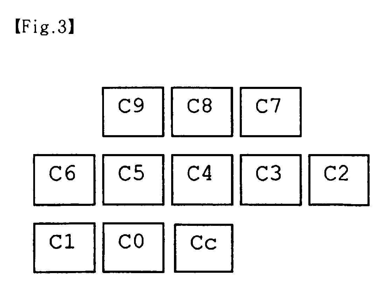

Recently, the demands for multimedia products have been increased which have functions of coding or manipulating only particular regions - or objects - of a frame of interest or need by the user without coding the entire region of the frame. To this end, active research has recently been conducted for object-based coding schemes adapted to encode only arbitrary shape regions of a frame, as a substitute for frame-based coding schemes adapted to encode the entire region of a frame. Figs. 1 and 2 illustrate test images for explanation of such an object-based coding scheme, respectively. Fig. 1 is a frame showing features of two children playing with a ball in an arbitrary space (background). Where coding of such an image is to be achieved using the object-based coding scheme, information, only associated with the children and ball, of the image is encoded and transmitted. That is, only texture information values of pixels associated with the children and ball are encoded and transmitted. In this case, the regions respectively associated with the children and ball are designated to be an object, whereas the remaining region of the picture other than the object is considered to be a background.

For coding of the picture shown in Fig. 1 using the object-based coding scheme, all pixels included in the frame should be distinguished into those associated with the children and ball and those associated with the background in an encoder and a decoder. This information is referred to as shape information of the object. In order to allow the decoder to recognize the shape information, the encoder should compressively encode the shape information and then transmit the resultant shape information bitstream to the decoder. Thus, the object-based encoder and decoder have a most remarkable difference from the frame-based encoder and decoder in that they include a shape information encoder and a shape information decoder, respectively.

Representative examples of such frame-based coding schemes include H.261 and H.263 of ITU-T, and MPEG-1 and MPEG-2 proposed by MPEG of ISO/IEC JTC1/SC29/WG11, all being standardized schemes. On the other hand, representative examples of object-based coding schemes include MPEG-4 of ISO/IEC JTC1/SC29/WG11 and JPEG2000 of ISO/IEC JTC1/SC29/WG1.

Fig. 2 shows shape information included in the image information where only the children and ball are considered to be an object. In this case, the pixels associated with the children and ball have shape information bearing a bright value whereas the pixels associated with the background have shape information bearing a dark value. Such shape information of pixels assigned with different values to distinguish those of the pixels associated with the object from those associated with the background is called a "binary mask". For example, all pixels associated with the background have a value of 0 whereas all pixels associated with the object have a value of 255. In other words, each pixel has a value selected from two values, namely, 0 and 255. In accordance with an appropriate method, it is possible to identify whether a pixel is a background pixel or an object pixel, based on the value thereof. Shape information may also be expressed by a contour indicative of the boundary between the background and the object. A transformation can be made between the shape information in the form of a binary mask and the shape information in the form of a contour. That is, the shape information having the form of a binary mask can be converted into contour information by carrying out a contour extraction. On the other hand, a contour filling is carried out when a binary mask is to be obtained from contour information.

In order to transmit shape information to a receiver or decoder after compressively coding the shape information into a reduced number of bits, an effective shape information coding method should be used. Shape information coding methods are mainly classified into a bitmap-based shape information coding method and a contour-based shape information coding method in accordance with whether the shape information used has the form of a binary mask or the form of contour information. A representative example of the bitmap-based coding method is a context-based arithmetic encoding (CAE) method whereas a representative example of the contour-based coding method is a vertex-based coding method.

An important concept of the CAE, which is a representative bitmap coding scheme, will be described hereinafter. Where many object pixels exist around a shape information pixel to be currently encoded, it is quite probable that the current shape information pixel is an object pixel. On the contrary, where many background pixels exist around the shape information pixel to be currently encoded, it is quite probable that the current shape information pixel is a background pixel. In accordance with the CAE, a variable length coding (VLC) is carried out, based on the above-mentioned characteristics. That is, coding is performed in such a fashion that a small number of bits are allocated for a pixel which is an object pixel while being surrounded by many object pixels whereas a large number of bits are allocated for a pixel which is an object pixel while being surrounded by many background pixels. In such a case, an arithmetic coding method is used for the VLC.

A combination of pixels arranged around a shape information pixel to be currently encoded is called a "context". Referring to Fig. 3, a context used for an intra shape information coding is illustrated. In Fig. 3, "Cc" represents a shape information pixel to be currently encoded, and "C0" to "C9" represent neighbored shape information pixels used upon encoding the pixel Cc, respectively. The context C of the pixel Cc can be calculated in accordance with the following Equation (1):

$$[\text{Equation 1}] \qquad C = C0 \times 2^0 + C1 \times 2^1 + C2 \times 2^2 + C3 \times 2^3 + \text{---} + C9 \times 2^9$$

After calculating the context C by the above equation, the probability of the derived context C is found from an arithmetic coding probability table stored with a variety of probabilities for a variety of contexts. Since "Ci" (i = 0, 1, 2, ..., 9) may have a value selected from two kinds of values, the context C thereof may have $2^{10}$ values ($2^{10}$ = 1,024). Accordingly, the probability table should be stored with probabilities respectively associated with 1,024 cases.

In the CAE, the context C for each pixel is calculated while raster scanning a binary mask which is shape information. Based on each calculated context C, an associated probability is found from the probability table. An arithmetic coding is then carried out, based on the found probability. In this case, it should be noted that the neighbored pixels C0 to C9 are pixels previously encoded. In terms of decoding, these neighbored pixels, which are used in the encoding procedure for the current pixel, are values obtained and stored after being decoded. In other words, information about neighbored pixels can be known at a decoder side. This means that it is unnecessary to transmit contexts C to the decoder.

The arithmetic coding scheme is a representative variable-length coding scheme, along with a Huffman coding scheme. The arithmetic coding scheme exhibits a superior performance over the Huffman coding scheme in terms of coding efficiency. This is because a real number of bits can be generated for each event or symbol in accordance with the arithmetic coding scheme whereas only an integer number of bits can be generated for each event or symbol in accordance with the Huffman coding scheme. For example, for events each having two kinds of values, namely, 0 and 1, one bit is allocated for each of the different values 0 and 1 in accordance with the Huffman coding scheme even if the occurrence probabilities of 0 and 1 are 0.999 and 0.001, respectively, that is, the occurrence probability of 0 is very high. In accordance with the arithmetic coding scheme, however, it is possible to generate a bitstream having a real number of bits in proportion to the occurrence probabilities of 0 and 1. In this regard, in the shape information coding, the arithmetic coding scheme is more advantageous than the Huffman coding scheme because shape information pixels can have only two different kinds of values, namely, 0 and 1 (or 0 and 255).

Transform coding is the most widely used coding scheme of known compressive coding schemes for image signals. In such a transform coding scheme, an image signal is transformed to transform coefficients or frequency coefficients and transmission of the transformed image signal is carried out with respect to low-frequency components while suppressing transmission of high-frequency components. This scheme has an advantage of a high compression ratio while reducing loss of picture quality. Examples of such a transform coding scheme include a discrete Fourier transform (DFT), a discrete cosine transform (DCT), a discrete sine transform (DST), and a Walsh-Hadamard transform (WHT).

Of such transform schemes, DCT is a scheme providing a superior compactness of image signal energy on low-frequency components. In other words, DCT provides a superior picture quality over other transform schemes, in spite of only using a smaller number of low-frequency transform coefficients. In addition, there is a fast algorithm for DCT. By virtue of such an advantage, DCT has been considered as a most common transform coding scheme and has been used in various image coding standardization schemes such as H.261, H.263, MPEG-1, MPEG-2, MPEG-4, and JPEG.

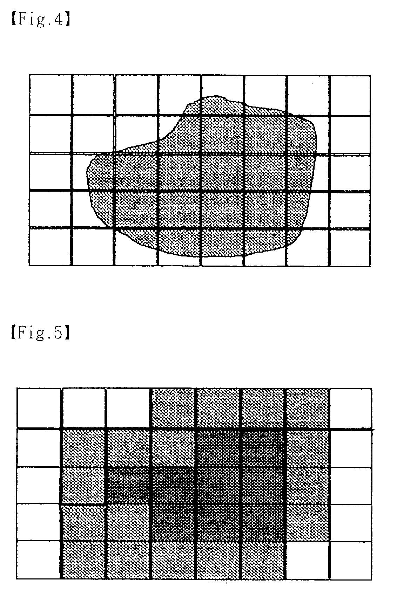

Research of such transform coding schemes has been made with respect to image signals in blocks each consisting of a set of square pixels with a certain size. In accordance with transform coding schemes developed, a rectangular frame is divided into a plurality of blocks having the same size. A transform coding is then carried out for each block. In the case of an object-based coding scheme, only texture information included in objects is encoded, as compared to a frame-based coding scheme in which image information of all pixels included in a rectangular frame is completely encoded. In such an object-based coding scheme, accordingly, it is required to conduct a transform coding only for image information of a part of blocks. Fig. 4 illustrates an object having an arbitrary shape and a set of blocks including the object. In Fig. 4, each square region is indicative of one block. Dark blocks are indicative of pixels associated with the object. In Fig. 5, white blocks correspond to blocks of Fig. 4 not to be encoded because there includes no object pixel, respectively. The black blocks of Fig. 5 are indicative of blocks which are to be processed by one of the known transform coding schemes because all pixels thereof are object pixels. The gray blocks of Fig. 5 are indicative of blocks each including both the object pixels and the non-object pixels, thereby requiring a transform coding only for image information of a part of pixels thereof. In the following description, blocks corresponding to such gray blocks are referred to as "boundary blocks". This scheme, in which a transform coding is not conducted for the entire portion of each square block, but conducted for a part of pixels included in each square block, is called a "shape-adaptive transform coding".

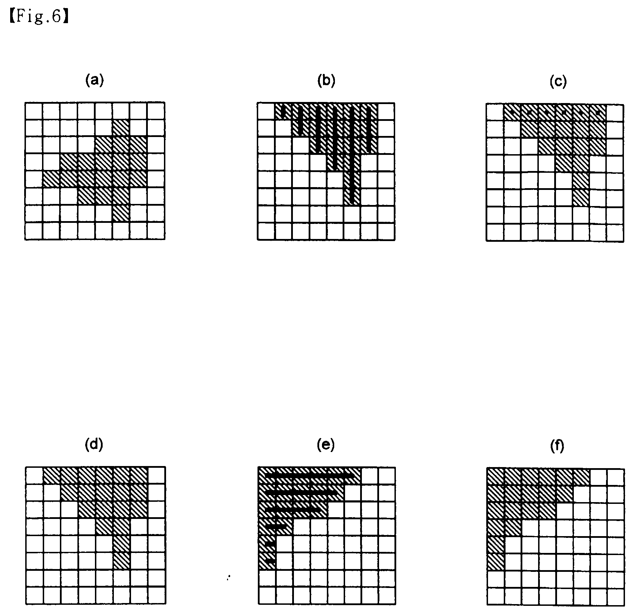

The shape-adaptive DCT scheme is a representative of shape-adaptive transform coding schemes. In accordance with this scheme, each block, which is a coding unit, has a size of 8 pixels per line x 8 lines per block. In accordance with the scheme, texture information of object pixels to be encoded is processed by a one-dimensional DCT in a vertical direction and then in a horizontal direction. Such a shape-adaptive DCT scheme will be described in conjunction with Figs. 6a to 6f. Referring to Fig. 6a, an 8x8 block is illustrated which has an object region to be encoded. In Fig. 6a, gray pixels are pixels associated with objects. For processing a shape-adaptive DCT coding for texture information of object pixels to be encoded, a rearrangement of pixels is carried out by vertically shifting those object pixels to the upper border of the block, thereby filling that border, as shown in Fig. 6b. In this state, one-dimensional DCT is performed in a vertical direction (indicated by thick lines in Fig. 6b) for texture information of each column including object pixels. As a result, transform coefficients of one-dimensional DCT are generated, as shown in Fig. 6c. The solid circles in Fig. 6c denote positions of mean values of vertical one-dimensional DCT, namely, direct current (DC) values, respectively. After completing the vertical one-dimensional DCT as shown in Fig. 6d, a pixel rearrangement is conducted again by shifting again the object pixels to the left border of the block. Thereafter, one-dimensional DCT is performed in a horizontal direction for the transform coefficients included in each of the rows, which include those transform coefficients, as shown in Fig. 6e. Fig. 6f shows positions of transform coefficients completing the one-dimensional DCT in both the vertical and horizontal directions. This procedure, namely, the transform, in which one directional DCT is carried out in a successive manner in the vertical and horizontal directions, is called a "shape-adaptive DCT". It should be noted that the positions of transform coefficients resulting from the shape-adaptive DCT may not coincide with those of input object pixels (or input shape information) and that the positions of those transform coefficients are determined only based on the input shape information. The number of transform coefficients resulting from the shape-adaptive DCT is equal to the number of object pixels, as in the other known DCT schemes.

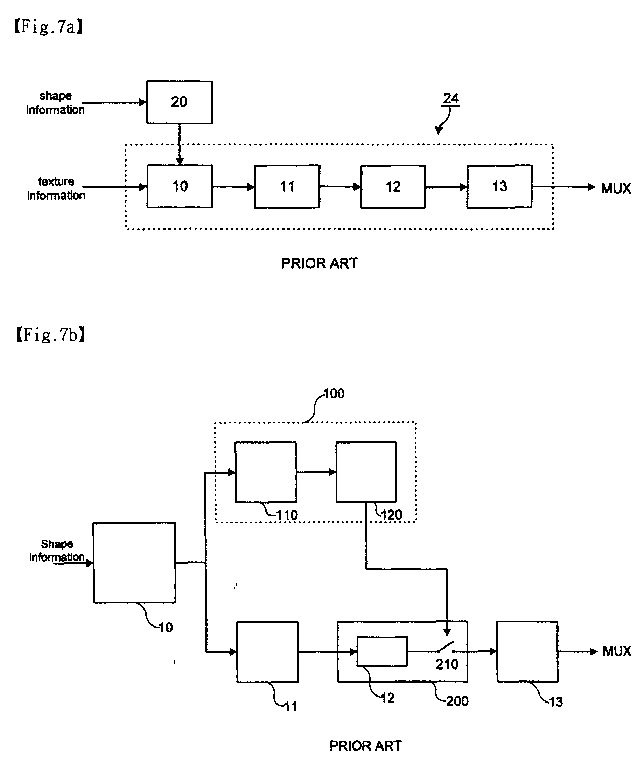

Fig. 7a illustrates a block diagram of a conventional image signal coding apparatus 24 which utilizes the above mentioned conventional shape-adaptive DCT. This apparatus 24 comprises a shape-adaptive DCT part 10 for performing a shape-adaptive DCT for texture information of object pixels, based on shape information, thereby outputting transform coefficients, a quantization part 12 for quantizing the transform coefficients for data compression, a scanning part 12 for arranging the received transform coefficients in a one-dimensional array, and a variable-length coding part 13 for performing a variable-length coding for the transform coefficients arranged in a one-dimensional array. A bitstream of texture information outputted from the variable-length coding part 13 is then transmitted to a receiver. Otherwise, the texture information bitstream may be transmitted to a multiplexer (MUX) or a receiver so that it is multiplexed with other signals (for example, beat streams of shape information).

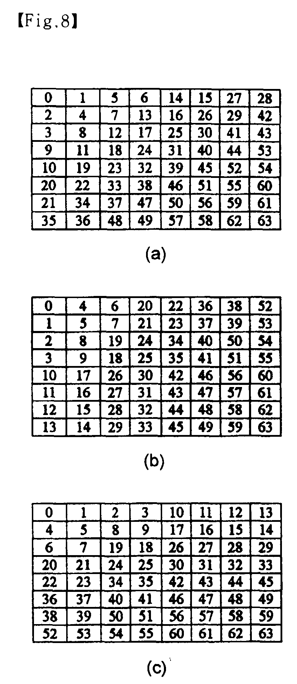

In the scanning part 12, various scanning methods such as a zig-zag scanning method or an alternate scanning method may be used. Such scanning methods are illustrated in Figs. 8a to 8c, respectively. The scanning methods of Figs. 8a to 8c are applicable to blocks having an 8x8 size. In Figs. 8a to 8c, the numerals indicated on respective portions of each block are indicative of the scanning order of corresponding transform coefficients upon arranging those transform coefficients in a one-dimensional array. Fig. 8a illustrates a zig-zag scanning method most widely used. As mentioned above, the energy of texture information concentrates on the low-frequency component of the texture information during a transform. Accordingly, the scanning is carried out in such a fashion that the transform coefficients are arranged in the order beginning from the lower frequency component of the texture information. That is, the scanning is carried out to encode the leading portion of the texture information while discarding the trailing portion of the texture information. The zig-zag scanning method is a representative method for such a purpose. The methods of Figs. 8b and 8c are techniques used in association with MPEG-2 and MPEG-4 schemes. These methods are used in the case in which the texture information has different characteristics of low frequency components between the row and column thereof.

Now, the variable-length coding operation carried out in the variable length coding part 13 will be described in conjunction with a scheme used in H. 263. In accordance with this scheme, EVENTS of transform coefficients with values not being "zero" are first derived. For the derived EVENTS, corresponding bitstreams are then sought from a given variable-length coding (VLC) table. Thereafter, the sought bitstreams are sequentially outputted. Each EVENT consists of a combination of three kinds of information. Namely, a LAST denotes whether or not the transform coefficient being currently encoded is the last transform coefficient. A RUN represents the number of successive zero transform coefficients preceding the current non-zero coefficient, and a LEVEL represents the magnitude of the current transform coefficient.

Such EVENTS, which are combined and defined as mentioned above, can be entropy-coded through a variable-length coding such as Huffman coding or arithmetic coding. That is, a smaller number of bits are allocated for EVENTS exhibiting a higher occurrence probability. On the other hand, a larger number of bits are allocated for EVENTS exhibiting a lower occurrence probability. Accordingly, it is possible to achieve coding of EVENTS using a considerably reduced number of bits, as compared to a fixed-length coding (FLC).

A part of a VLC table used for H.263 is illustrated in the following Table 1.

Table 1

| INDEX | LAST | RUN | LEVEL | BIT | VLC CODE |
|---|---|---|---|---|---|
| 0 | 0 | 0 | 1 | 3 | 10s |
| 1 | 0 | 0 | 2 | 5 | 1111s |
| 2 | 0 | 0 | 3 | 7 | 0101 01s |
| 3 | 0 | 0 | 4 | 8 | 0010 111s |
| 4 | 0 | 0 | 5 | 9 | 0001 1111s |
| 5 | 0 | 0 | 6 | 10 | 0001 00101s |
| 6 | 0 | 0 | 7 | 10 | 0001 0010 0s |
| 7 | 0 | 0 | 8 | 11 | 0000 1000 01s |
| 8 | 0 | 0 | 9 | 11 | 0000 1000 00s |
| 9 | 0 | 0 | 10 | 12 | 0000 0000 111s |
| 10 | 0 | 0 | 11 | 12 | 0000 0000 110s |
| 11 | 0 | 0 | 12 | 12 | 0000 0100 000s |
| 12 | 0 | 1 | 1 | 4 | 110s |
| 13 | 0 | 1 | 2 | 7 | 0101 00s |
| 14 | 0 | 1 | 3 | 9 | 0001 1110s |
| 15 | 0 | 1 | 4 | 11 | 0000 0011 11s |
| 16 | 0 | 1 | 5 | 12 | 0000 0100 001s |
| 17 | 0 | 1 | 6 | 13 | 0000 0101 0000s |
| 18 | 0 | 2 | 1 | 5 | 1110s |
| 19 | 0 | 2 | 2 | 9 | 0001 1101s |
| 20 | 0 | 2 | 3 | 11 | 0000 0011 10s |
| 21 | 0 | 2 | 4 | 13 | 0000 0101 0001s |
| 22 | 0 | 3 | 1 | 6 | 0110 1s |
| 23 | 0 | 3 | 2 | 10 | 0001 0001 1s |
| 24 | 0 | 3 | 3 | 11 | 0000 0011 01s |

In the Table 1, the first column represents indexes for distinguishing EVENTs from each another. The second column represents LASTs. "LAST = 0" denotes that a coefficient to be coded is not the last transform coefficient whereas "LAST = 1" denotes that the coefficient is the last one. The third column represents RUNs. The fourth column represents LEVELs indicative of levels of transform coefficients. The fifth column represents the number of bits generated for each EVENT. The last column represents a bitstream generated for each EVENT. In the last column, "s" is indicative of the sign of each LEVEL. An s of "0" (s = 0) is indicative of the fact that the associated LEVEL is a positive number whereas an s of "1" (s = 1) is indicative of the fact that the associated LEVEL is a negative number.

With regard to the occurrence probability of EVENTS, it should be noted that EVENTS exhibit a lower occurrence probability at greater RUN values and a higher occurrence probability at smaller RUN values. Where the variable-length coding is conducted, taking RUNs into consideration, accordingly, a larger amount of bits are allocated for an EVENT with a smaller RUN value whereas a smaller amount of bits are allocated for an EVENT with a greater RUN value. Referring to the VLC table of H.263 as shown in Table 1, such a feature can be clearly understood. This will be exemplarily described in conjunction with EVENTs (INDEX = 1, 13, 19) respectively having RUNs of 0, 1, 2, along with LAST = 0 and LEVEL = 2. For the EVENT bearing INDEX = 19 (LAST = 0, RUN = 2, and LEVEL = 2), nine bits are allocated. Seven bits are allocated for the EVENT bearing INDEX = 13 (LAST = 0, RUN = 1, and LEVEL = 2) . On the other hand, five bits are allocated for the EVENT bearing INDEX = 1 (LAST = 0, RUN = 0, and LEVEL = 2). Thus, a larger amount of bits are allocated at a greater RUN value under the condition in which the LAST and LEVEL values are constant.

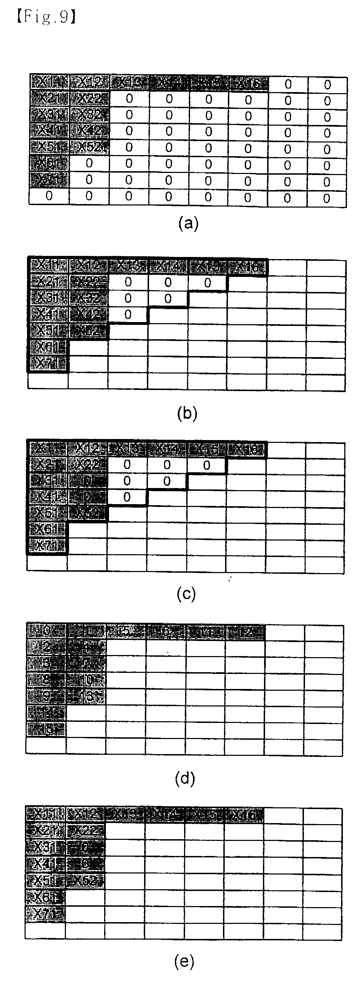

Known shape-adaptive DCT coding schemes may use the above mentioned transform coefficient VLC method or VLC table. This will be exemplarily described in conjunction with Figs. 9a to 9e. Fig. 9a shows the result obtained after carrying out a shape-adaptive DCT and quantization for an image signal in the form of an 8x8 block. In Fig. 9a, the dark segments correspond to object pixels of the block, respectively. Accordingly, the dark segments are indicative of segments containing transform coefficients generated due to the object pixels, respectively. The remaining bright segments are indicative of segments containing no transform coefficient, thereby being set with a transform coefficient value of "0". In each dark segment, "Xij" represents a transform coefficient positioned at an i-th position in a horizontal direction and a j-th position in a vertical direction. When all transform coefficients of the block are scanned in a zig-zag scanning order as shown in Fig. 8a, they are arranged in the order of X11, X12, X21, X31, X22, X13, X14, 0, X32, X41, X51, X42, 0, 0, X15, X16, 0, 0, 0, X52, X61, X71, 0, 0, ..., and 0. If the transform coefficient X71 is not zero, then the variable-length coding can be carried out only for segments positioned within the region defined by the thick solid line of Fig. 9b. Fig. 9c illustrates the case in which two transform coefficients X32 and X42 are zero whereas the remaining transform coefficients have non-zero values, respectively. When the transform coefficient X41 is encoded in this case, its LAST value is zero (LAST = 0) because it is not the last one of non-zero transform coefficients in the block. In this case, LEVEL and RUN values are X41 and 2, respectively. With regard to the transform coefficient X41, such an increase in RUN value caused by the transform coefficient X32 having a value of zero is reasonable because the zero value of the transform coefficient X32 is generated in accordance with a signal information of associated object. However, the transform coefficient value of zero existing between the transform coefficients X14 and X32 is a value not generated in accordance with the object information transform, but given for a segment containing no transform coefficient. Accordingly, transmission of such information is unnecessary and rather results in an increase in RUN value. As a result, there is a disadvantage in that an increased number of bits is generated. This causes a degradation in the coding efficiency of the shape-adaptive DCT coding.

Although problems involved in the conventional shape-adaptive DCT coding, which is a representative shape-adaptive transform coding scheme, have been described, other shape-adaptive transform coding schemes including transform coding schemes for conducting transform coding only for object pixels of blocks also have the same problems. That is, the conventional shape-adaptive transform coding schemes have a problem in that an addition of unnecessary values of zero is involved in the scanning procedure because transform coefficients corresponding in number to all pixels of each block are generated.

Meanwhile, a variety of VLC coding schemes for carrying out a VLC for transform coefficients have been used. Although the VLC table of H.263 has been exemplified in the above description, a VLC table consisting of a combination of only RUN and LEVEL is used in the cases of JPEG, MPEG-1, and MPEG-2. In this case, however, the above-mentioned problem also occurs because an increase in RUN value results in an increase in the number of coding bits. That is, an addition of unnecessary values of zero may be involved in the shape-adaptive transform coding procedure. For this reason, the same problem as above, namely, a degradation in coding efficiency, occurs.

In order to solve the above-mentioned problem, an object-based coding method for image signals, which is adapted to reduce the number of coding bits, is disclosed in Japanese Patent No. 2823843. In accordance with this method, transform coefficients of a block processed by a shape-adaptive transform are scanned in such a fashion that segments of the block containing no transform coefficient are skipped, so as to generate a reduced number of bits in a variable length coding part. The configuration of a conventional image signal coder, which realizes such a method, will be described in conjunction with Fig. 7b.

As shown in Fig. 7b, the conventional image signal coder includes a shape-adaptive transform part 10 for performing a shape-adaptive transform for an input image signal, a scan control part 100 for checking transform coefficient information outputted from the shape-adaptive transform part 10, dividing the input image signal into segments containing transform coefficients and segments containing no transform coefficient, based on the result of the checking, and controlling a scanning operation in such a fashion that the segments containing no transform coefficient are skipped during the scanning operation, a quantization part 11 for quantizing transform coefficients outputted from the shape-adaptive transform part 10, a scanning part 200 for performing a scanning operation in accordance with a control signal outputted from the scan control part 100, thereby arranging quantized transform coefficients outputted from the quantization part 11 in the form of a one-dimensional signal, and a variable-length coding part 13 for performing a variable-length coding for the signal outputted from the scanning part 200. The scan control part 100 includes a binary mask forming part 110 for forming a binary mask adapted to distinguish segments containing transform coefficients from segments containing no transform coefficient, and a control part 120 for receiving the binary mask from the binary mask forming part 110 and generating a signal indicative of whether or not each segment contains a transform coefficient while scanning the binary mask in the same manner as that in the scanning part 200. The scanning part 200 includes a scanning part 12 for scanning transform coefficients in the same manner as in the conventional scanning method, and a switch 210 for switching on and off an output signal from the scanning part 12 in accordance with a control signal outputted from the scan control part 100.

The method of Fig. 7b is advantageous in that it reduces the problems involved in the shape-adaptive coding method of Fig. 7a because it is determined whether or not each segment contains a transform coefficient, so as to skip the scanning operation for segments containing no transform coefficient. In this method, however, the coefficient mask can be formed after the shape-adaptive coding is completed. In other words, the formation of the coefficient mask is on standby until the shape-adaptive coding is completed. For this reason, the entire process is delayed. Furthermore, it is impossible to form an accurate coefficient mask because the formation of the mask is carried out based on coefficients. In accordance with this conventional method, in which a coefficient mask is formed based on coefficients generated in accordance with a shape-adaptive transform, it may be possible to achieve the formation of the coefficient mask by distinguishing those coefficients from one another, based on initial information contained in a block and set to an optional value in association with each coefficient. Where a coefficient having the same value as the corresponding initial value contained in the block is generated, it is impossible to distinguish them from each other. In this case, it is impossible to form an accurate coefficient mask. Meanwhile, a large number of bits are typically needed for transmission of shape information. Where such a large number of bits are transmitted via a channel with a limited bandwidth, accordingly, a lossy coding is frequently used. In order to achieve object-adaptive coding and decoding in a coder and a decoder, respectively, the same shape information should be used. In the decoder, reconstructed shape information only can be obtained. For this reason, where an object-adaptive coding is carried out based on input shape information while involving a lossy coding resulting in a difference of reconstructed shape information from the input shape information, there is a problem in that it is impossible to carry out object-adaptive decoding in the decoder.

SUMMARY OF THE INVENTION

Therefore, an object of the invention is to overcome the above-mentioned problems and to provide an object-based coding apparatus and method for image signals, wherein coding of an input image signal, which is performed in such a fashion that upon scanning shape-adaptive transform coefficients of the input image signal transformed in accordance with a shape-adaptive transform for object-based coding thereof, only segments containing such shape-adaptive transform coefficients are scanned, is carried out using reconstructed shape information obtained by encoding the shape information of the input image signal, thereby achieving an improvement in the coding rate and accuracy.

Another object of the invention is to provide an object-based decoding apparatus and method for image signals capable of effectively decoding image data transmitted after being encoded in accordance with the coding method of the present invention.

In accordance with one aspect, the present invention provides an object-based coding apparatus for image signals including: a shape information coding part for encoding shape information contained in an input image signal, and outputting a bitstream of said encoded shape information to a multiplexing part, said shape information coding part also outputting reconstructed shape information recovered during said encoding process to a texture information coding part; said texture information coding part for encoding texture information of segments of said input image signal associated with objects, based on said reconstructed shape information received from said shape information coding part, and sending said encoded texture information to said multiplexing part; and said multiplexing part for multiplexing said encoded shape information bitstream received from said shape information coding part with a bitstream of said encoded texture information received from said texture information coding part and sending said multiplexed bitstreams to the next receiver, wherein said texture information coding part comprises:

a shape-adaptive transform part for carrying out a shape-adaptive transform for said texture information of said input image signal, based on said reconstructed shape information outputted from said shape information coding part;

a shape-adaptive scan control part for forming a binary coefficient mask having the same transform coefficient distribution as that of an output signal from said shape-adaptive transform part, based on said reconstructed shape information received from said shape information coding part, and generating a scan control signal in accordance with existence or non-existence of a transform coefficient determined based on said binary coefficient mask; and a shape-adaptive scanning part for carrying out a scanning operation for said output signal from said shape-adaptive transform part, based on said control signal from said shape-adaptive scan control part, thereby outputting an encoded bitstream to said multiplexing part

In accordance with another aspect, the present invention provides an object-based coding method for image signals carried out in an object-based image signal coding apparatus including: a shape information coding part for encoding shape information contained in an input image signal, outputting a bitstream of the encoded shape information to a multiplexing part, said shape information coding part also outputting, to a texture information coding part, reconstructed shape information recovered during said encoding process; said texture information coding part for encoding texture information contained in said input image signal, based on said reconstructed shape information outputted from said shape information coding part, said texture information coding part including a shape-adaptive transform part for carrying out a shape-adaptive transform for said texture information, a shape-adaptive scan control part including a coefficient mask forming part and a control signal generation part, and a shape-adaptive scanning part; and said multiplexing part for multiplexing said shape information bitstream received from said shape information coding part with a bitstream of said encoded texture information received from said texture information coding part, comprising the steps of:

forming, in said shape-adaptive scan control part and based on said reconstructed shape information outputted from said shape information coding part, a binary coefficient mask having the same transform coefficient distribution as that of an output signal from said shape-adaptive scan control part and sorting segments containing transform coefficients from segments containing no transform coefficients, thereby generating a binary coefficient mask value for said segments containing transform coefficients;
performing, in said shape-adaptive transform part, a shape-adaptive transform for said texture information contained in said image signal, based on said reconstructed shape information outputted from said shape information coding part; and
performing, in said shape-adaptive scanning part, a scanning operation for transform coefficients outputted from said shape-adaptive transform part, based on generation or non-generation of said binary coefficient mask value from said shape-adaptive scan control part, in such a fashion that said scanning operation is skipped for said segments containing no transform coefficient.

In accordance with another aspect, the present invention provides an object-based decoding apparatus for image signals including a demultiplexing part for demultiplexing, an object bitstream transmitted thereto after being encoded, into a shape information bitstream and a texture information bitstream, and sending said bitstreams to a shape information decoding part and a texture information decoding part, respectively; said shape information decoding part for decoding said shape information bitstream received from said demultiplexing part, thereby generating reconstructed shape information, and sending said reconstructed shape information to said texture information decoding part for an object-based decoding process in said texture information decoding part; and said texture information decoding part for decoding said texture information bitstream received from said demultiplexing part, based on said reconstructed shape information received from said shape information decoding part, wherein said texture information decoding part comprises:

a shape-adaptive inverse scan control part for forming a binary coefficient mask based on said reconstructed shape information outputted from said shape information decoding part, and generating an inverse scan control signal in accordance with existence or non-existence of a transform coefficient based on said binary coefficient mask; and
a shape-adaptive inverse scanning part for carrying out an inverse scanning operation for transform coefficients of said texture information contained in said transmitted object bitstream, based on the associated control signal from said shape-adaptive inverse scan control part, in such a fashion that said transform coefficients are arranged in the form of a two-dimensional signal; and
a shape-adaptive inverse transform part for carrying out a shape-adaptive inverse transform for said inversely-scanned transform coefficients outputted from said shape-adaptive inverse scanning part, based on said reconstructed shape information outputted from said shape information decoding part, thereby reconstructing texture information of an original image signal.

BRIEF DESCRIPTION OF THE DRAWINGS

Other objects and aspects of the invention will become apparent from the following description of embodiments with reference to the accompanying drawings in which:

Fig. 1 is a view illustrating a test image for explanation of an object-based coding scheme;
Fig. 2 is a view illustrating the shape information of the test image shown in Fig. 1;
Fig. 3 is a view illustrating a context templet for a CAE scheme;
Fig. 4 is a schematic view illustrating object blocks for a shape-adaptive transform coding;
Fig. 5 is a schematic view for explanation of the shape-adaptive transform coding for each block of Fig. 3;
Figs. 6a to 6f are schematic views respectively illustrating successive steps involved in a general shape-adaptive DCT procedure;
Fig. 7a is a block diagram illustrating a conventional shape-adaptive image signal coding apparatus;
Fig. 7b is a block diagram illustrating a conventional shape-adaptive image signal coding apparatus in which upon scanning transform coefficients of a block processed by a shape-adaptive transform, segments containing no transform coefficient are skipped;
Figs. 8a to 8c are schematic views for explanation of scanning methods to which the present invention is applicable, respectively;
Figs. 9a to 9e are schematic views for explanation of a VLC method for quantized transform coefficients, respectively;
Fig. 10 is a block diagram illustrating an object-based image signal coder according to the present invention;
Fig. 11 is a block diagram illustrating an object coding unit according to the present invention;
Fig. 12 is a block diagram illustrating an apparatus for object-based coding of image signals in accordance with the present invention;
Figs. 13a to 13d are schematic views for explanation of up-sampling and down-sampling methods for a CR calculation, respectively;
Fig. 14 is a block diagram illustrating an object-based image signal coding apparatus according to the present invention;
Fig. 15 is a block diagram illustrating a coefficient mask forming part included in the object-based image signal coding apparatus according to the present invention;
Figs. 16a and 16b are block diagrams respectively illustrating different embodiments of a shape-adaptive scanning part according to the present invention;
Fig. 17 is a block diagram illustrating an object-based decoding system according to the present invention;
Fig. 18 is a block diagram illustrating an object decoding part according to the present invention;
Fig. 19 is a block diagram illustrating an apparatus for object-based decoding of image signals in accordance with the present invention;
Fig. 20 is a block diagram illustrating a shape information decoding part included in the object-based image signal decoding apparatus according to the present invention; and
Figs. 21a and 21b are block diagrams respectively illustrating different embodiments of a shape-adaptive inverse scanning part according to the present invention.

DESCRIPTION OF THE PREFERRED EMBODIMENTS

Now, an object-based coding and decoding system for image signals in accordance with the present invention will be described in detail. The object-based coding/decoding system includes a coding apparatus for coding an input image signal using a compression technique, and a decoding apparatus for decoding the resultant coded signal from the coding apparatus in accordance with a procedure reverse to that in the coding procedure, thereby recovering the original image signal.

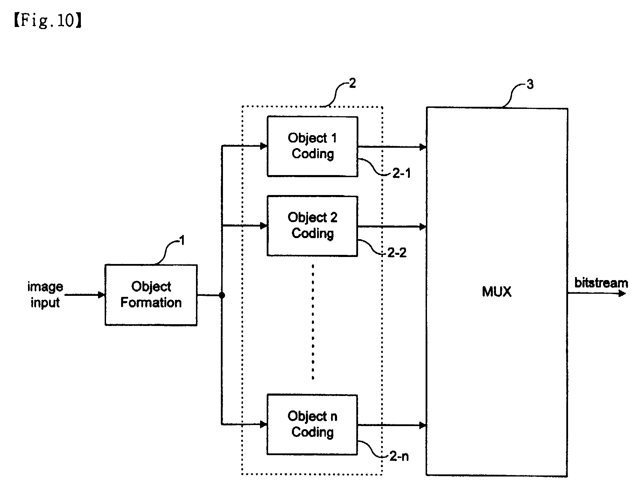

Figs. 10 to 12 illustrate respective object-based image signal coding systems to which the present invention is applicable. Fig. 10 is a block diagram illustrating a general object-based image signal coding system. This system is adapted to divide an input image signal into object segments each having arbitrary shape information and to carry out a coding operation for each of the object segments. In the following description, such object segments are simply referred to as "objects". An input image signal is first applied to an object formation part 1 included in the objected-based image signal coding system. In the object formation part 1, the input image signal is divided into objects. The object formation part 1 then derives shape information and texture information for each object. The resultant signals for each object are applied to an object coding part 2 which, in turn, conducts a coding operation for those signals. This coding operation of the object coding part 2 is sequentially carried out for all objects (2-1, 2-2, ..., and 2-n). Outputs resulting from the object coding for all objects, namely, bitstreams are then multiplexed in a multiplexer (MUX) which, in turn, sends the resultant signal to a receiver.

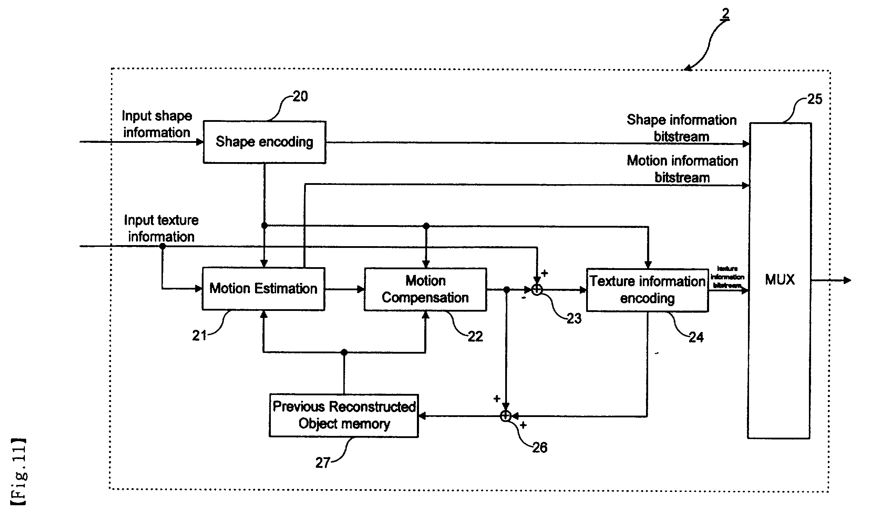

Fig. 11 illustrates the configuration of an object coding unit included in the object coding part 2 of Fig. 10. Although the object coding part 2 is shown in Fig. 10 as consisting of a plurality of object coding units, it practically includes a single object coding unit which repeatedly performs a coding operation shown in Fig. 11 by n times (2-1, 2-2, ..., and 2-n) for n objects. The illustration of Fig. 10 is only to emphasize individual encoding operations of the object encoding part 2 for objects. Signal information of each object, which is inputted at the object coding unit, is divided into shape information and texture information. These shape information and texture information are first received in a shape information coding part 20 and a motion estimation part 21, respectively.

The shape information coding part 20 serves to encode the shape information of the associated object. The resultant reconstructed shape information is then applied to a motion compensation part 22 and a texture information coding part 24. Thus, the operation of each part is carried out for each object. Meanwhile, a shape information bitstream, which is another output from the shape information coding part 20, is applied to a multiplexer 25. The reconstructed shape information is used to control motion estimation, motion compensation, and texture information coding processes, etc. In order to achieve the same control in a decoding system, reconstructed shape information decoded from a bitstream of shape information received in the decoding system should be identical to the reconstructed shape information used in the coding system. Meanwhile, where a lossless coding is carried out in the shape information coding part, reconstructed shape information, which is identical to input shape information, is generated. However, where a lossy coding is carried out, reconstructed shape information different from input shape information is generated. For this reason, the control for the object-based coding is not carried out using input shape information, but carried out using reconstructed shape information. In the following description, the term "shape information" means reconstructed shape information unless specifically explained. The motion estimation part 21 serves to seek motion information of the texture information of the current object using the texture information of the current object and the texture information of the previous object stored in a previous reconstructed object memory 27. The estimated motion information is input to the motion compensation part 22 for a motion compensated prediction. The estimated motion information is compressively encoded and then the resultant motion information bitstream is input to the multiplexer 25. The motion compensation part 22 carries out a motion compensated prediction using the motion information derived by the motion estimation part 21 and the previous reconstructed texture information stored in the previous reconstructed object memory 27.

A subtractor 23 calculates a prediction error, namely, a difference between the input texture information and the motion compensated prediction texture information derived by the motion compensation part 22. The resultant signal from the subtractor 23 is encoded in the texture information coding part 24. The resultant texture information bitstream from the texture information coding part 24 is applied to the multiplexer 25 and the reconstructed prediction error signal is applied to an adder 26. This adder 26 adds the reconstructed error signal to the motion compensated prediction signal, thereby generating a reconstructed object signal. This reconstructed object signal is stored in the previous reconstructed object information memory 27 so that it is used for coding of an object to be subsequently inputted.

Using the reconstructed shape information received from the shape information coding part 20, the texture information coding part 24 encodes the texture information of an associated object. In the texture information coding part 24, the coding operation is not carried out for an entire object, but carried out on a block basis which is a pixel set having a certain size, for example, a MxN size.

Meanwhile, although the texture information coding part of Fig. 11 is illustrated as being adapted to encode prediction error signals, it may be possible to encode input texture information in place of such prediction error signals. In this regard, it is possible to achieve an improvement in coding efficiency by adaptively encoding a selected one of the prediction error signal and texture information signal enabling an efficient coding thereof. For example, where motion information estimation is inaccurately carried out, the resultant prediction error signal has an increased value. In this case, accordingly, it is preferred that the input texture information be encoded. This is because a smaller number of bits is generated. Where coding of input texture information is carried out, it is unnecessary to use an adder operation for adding the reconstructed texture information to the prediction signal. Therefore, the coding part generally includes a control unit for determining a suitable mode and carrying out a control based on the determined mode, even though not shown in Fig. 11. However, such a control part has no direct relation with the present invention.

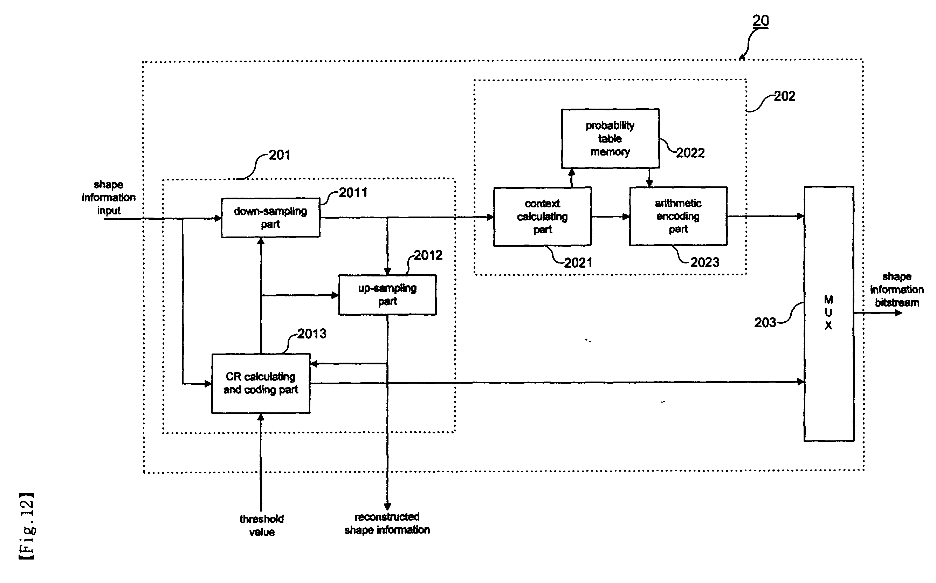

Fig. 12 illustrates a detailed configuration of the shape information coding part 20. This configuration is adapted to use the above-mentioned CAE method. The shape information coding part 20 mainly includes three parts, namely, a pre-processing part 201, a CAE part 202, and a multiplexing part 203. The shape information coding part 20 shown in Fig. 12 operates in accordance with an intra shape information coding method using the CAE scheme. The shape information coding part may also be configured so that it operates in accordance with an inter CAE coding method or a vertex-based shape information coding method as mentioned above. The method for configuring the shape information coding part is not particularly limited.

The pre-processing part 201 of the shape information coding part 20 shown in Fig. 12 is a part enabling a lossy coding in order to overcome a limitation involved in the transmission of shape information. The CAE is a method for performing a coding process for every binary alpha block (hereinafter, simply referred to as "BAB") having an arbitrary size, deriving a context C of each shape information pixel in the BAB while performing a raster scanning for all the shape information pixels, and performing an arithmetic coding based on the derived contexts C. Where a degradation in coding efficiency occurs due to generation of a large number of bits for shape information, it should be allowed to perform a lossy coding in order to reduce the amount of data being transmitted while involving a slight loss in the reconstructed picture quality. For such a lossy coding, the shape information coding part of Fig. 12 uses a method for reducing the resolution of BABs, thereby reducing the number of pixels to be processed by the CAE. This method is carried out in the pre-processing part 201.

The pre-processing part 201 includes a down-sampling part 2011, an up-sampling part 2012, and a conversion ratio (CR) calculating and coding part 2013. An input BAB to be encoded is first down-sampled in the down-sampling part 2011, so as to reduce the resolution of the BAB. The resultant BAB having such a reduced resolution is then up-sampled in the up-sampling part 2012. The CR calculating and coding part 2013 calculates a difference between the input BAB and the up-sampled BAB and then compares the calculated difference with a given threshold value. When the calculated difference is less than the threshold value, the down-sampled BAB having a reduced resolution is transmitted to a receiver after being encoded in the CAE part 202. Since the decoding system should know the size or resolution of a BAB to be decoded, the degree of down-sampling should be known. Information about such a degree of down-sampling is referred to as "CR". The CR calculating and coding part 2013 encodes a calculated CR and transmits the resultant bitstream of CR, along with a bitstream outputted from the CAE part, to the receiver. When the calculated difference between the input BAB and the up-sampled BAB is not less than the threshold value, the BAB of an original size should be coded by CAE method.

The threshold value used in the CR calculating and coding part 2013 is optionally inputted by the user. Otherwise, the threshold value may be controlled by a buffer. Where a large number of bits to be transmitted are filled in the buffer, a high threshold value is inputted to the CR calculating and coding part 2013 so that the coding of a shape information with the smaller size than the input BAB is carried out resulting in a low picture quality. If not, a low threshold value is inputted to generate a large number of bits for the shape information resulting in a high picture quality.

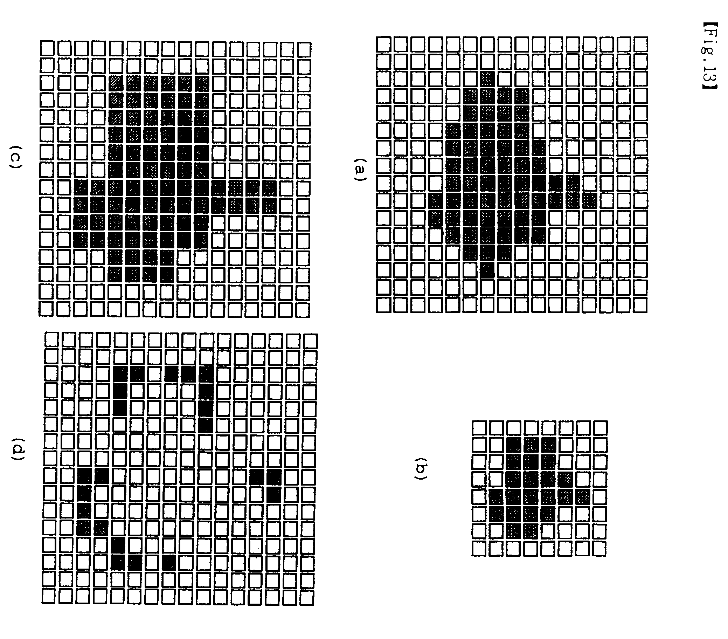

Such a shape information coding procedure will now be described in conjunction with Figs. 13a to 13d. Figs. 13a to 13d illustrate an example of a BAB having a size of 16 pixels/line x 16 lines per BAB, respectively. Fig. 13a shows an input BAB whereas Fig. 13b shows a BAB obtained after 1/2 down-sampling the input BAB in both the vertical and horizontal directions. Fig. 13c shows a BAB obtained after up-sampling the down-sampled BAB into an original resolution, namely, a 16 x 16 resolution. In this case, the down-sampling method used is a method in which where at least one of neighbored four pixels is an object pixel, all four pixels are designated as an object pixel of the down-sampled image. The up-sampling method is a method for generating four pixels from one pixel. Fig. 13d shows a difference between the input BAB and the resultant BAB obtained after up-sampling the down-sampled BAB. Where the difference is less than a given threshold value, coding is not carried out for the input BAB of Fig. 13, but carried out for shape information of Fig. 13b which has a size corresponding to 1/4 of the input BAB. CR information is transmitted to the receiver after being encoded in the coding system because the decoding system should know the resolution of the information transmitted thereto. The CR in the case of Figs. 13a to 13d is 1/4. The down-sampling and up-sampling used in the above example are simplest methods. Where a more sophisticated method is used, it may be possible to further reduce the difference between the input BAB and the up-sampled BAB. In accordance with the above-mentioned conversion method, a transmition at a low rate can be achieved by greatly reducing the number of bits being transmitted even though the reconstructed shape information has a difference from the input shape information.

The decoding system performs a CAE decoding process for the 8 x 8 BAB of Fig. 13b and up-samples the resultant BAB, thereby reconstructing the BAB. In this regard, the reconstructed shape information used in the coding system is not input shape information, but an up-sampled BAB, as shown in Fig. 12.

Now, the CAE procedure carried out in the CAE part 202 of Fig. 12 will be described. A down-sampled BAB exhibiting a low resolution or a BAB having an original resolution is first inputted to a context calculating part 2021. The context calculating part 2021 performs a context calculation while raster-scanning the BAB inputted from the down-sampling part 2011. Where no down-sampling is performed, the context calculating part 2021 should scan 256 (16 x 16) shape information pixels. Where a 1/4 down-sampling is performed, the context calculating part 2021 should scan 64 (8 x 8) pixels of the down-sampled BAB. The context information obtained after the context calculation is sent to a probability table memory 2022 which is stored with probabilities of all possible contexts. An arithmetic coding is performed in an arithmetic encoding part 2023 using a context outputted from the context calculating part 2021 and a probability, corresponding to the context, outputted from the probability table memory 2022.

The multiplexing part 203 multiplexes the CR information bitstream outputted from the pre-processing part 201 with a bitstream outputted from the arithmetic encoding part 2023, thereby outputting a shape information bitstream.

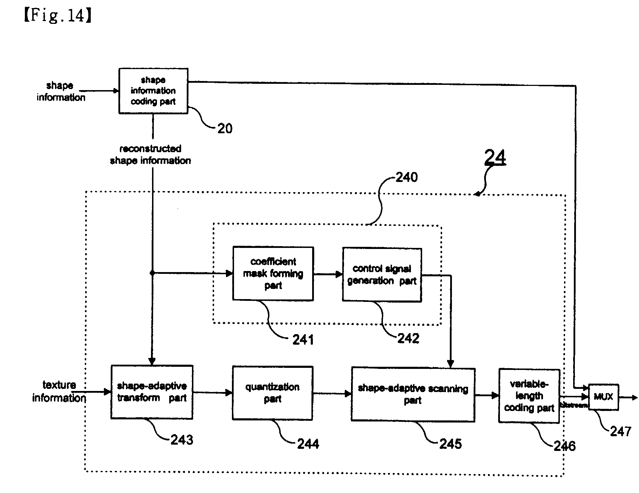

Fig. 14 illustrates an apparatus for object-based coding of image signals in accordance with the present invention. This apparatus corresponds to the texture information coding part 24 of Fig. 11. As shown in Fig. 14, the apparatus includes a shape-adaptive scan control part 240 for receiving reconstructed shape information from the shape information coding part 20, thereby generating a control signal for sorting segments containing transform coefficients from segments containing no transform coefficient so as to control a scanning operation in such a manner that the segments containing transform coefficients are scanned in a scan order while the segments containing no transform coefficient are excluded from the scan order. The apparatus further includes a shape-adaptive scanning part 245 which scans quantization coefficients contained in the segments containing transform coefficients while excluding the segments containing no transform coefficient, thereby skipping them, in response to the control signal generated from the shape-adaptive scan control part 240.

The scan control part 240 includes a coefficient mask forming part 241 and a scan control signal generation part 242. The coefficient mask forming part 241 is adapted to form a coefficient mask for sorting segments containing transform coefficients from segments containing no transform coefficient. The scan control signal generation part 242 serves to generate a skip signal for skipping segments containing no transform coefficient from the scanning operation of the shape-adaptive scanning part.

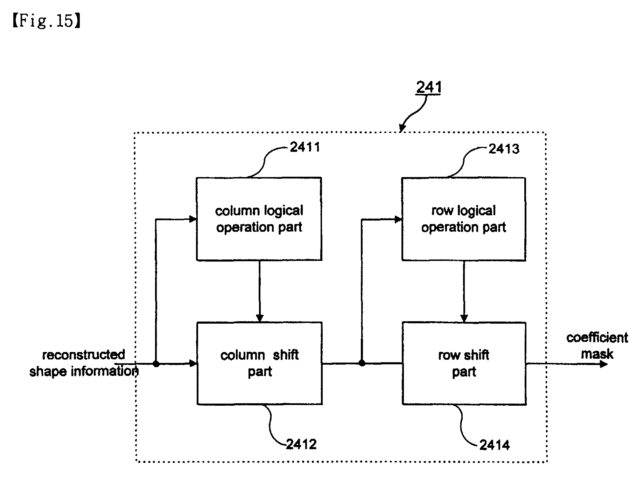

The configuration and operation of the coefficient mask forming part 241 will now be described. As shown in Fig. 15, the coefficient mask forming part 241 includes a column logical operation part 2411 for receiving the reconstructed shape information from the shape information coding part, determining whether or not each column of the input BAB contains at least an object pixel by a logical operation, and outputting the result of the determination, and a column shift part 2412 for receiving an output from the logical operation part, thereby upwardly shifting pixels associated with each of columns containing object pixels to the upper boundary of the input BAB. The coefficient mask forming part 241 further includes a row logical operation part 2413 for receiving an output from the column shift part 2412, determining whether or not each row of the BAB contains an object pixel by a logical operation, and outputting the result of the determination, and a row shift part 2412 for receiving an output from the row logical operation part 2413 along with the output from the column shift part 2412, thereby left-shifting pixels associated with each of rows containing object pixels, to the left boundary of the BAB, and thus forming a final binary coefficient mask.

The coefficient mask forming part 241 receives the reconstructed shape information from the shape information coding part 20 and outputs a binary coefficient mask having the same arrangement as that of the coefficients obtained after a shape-adaptive coding process. Where the shape-adaptive coding process used is a shape-adaptive DCT, a binary mask of Fig. 6f is outputted when shape information of Fig. 6a is inputted.

Referring to Fig. 15, the operation of the coefficient mask forming part 241 will be described in detail. First, the column logical operation part 2411 receives each column of the input BAB and determines whether or not the received column contains at least an object pixel. Since the input information is binary mask information which can be expressed by one bit per pixel, a logical operator, which is a bit-wise operator, is used. For example, an OR operator may be used. Where a value of 1 is outputted after the ORing operation, it means that there is at least one object pixel contained in the received column. Where a value of 0 is outputted after the ORing operation, it means that there is no object pixel contained in the received column. The column shift part 2412 performs a pixel shift for columns each associated with the value of 1 outputted from the column logical operation part 2411, in order to obtain an arrangement of Fig. 6b. That is, the object pixels of the received column are shifted in such a fashion that they fill the BAB from the upper border. This pixel shift may be a bit-based shift. Consequently, the output from the column shift part 2412 is indicative of an arrangement of object pixels in the form of Figs. 6b to 6d. The row logical operation part 2413 receives the output signal from the column shift part 2412 and determines whether or not each row of the BAB contains an object pixel. The row logical operation part 2413 performs the same operation as that of the column logical operation part 2411 except that the operation is carried out for every row. Where a value of 1 is outputted after the ORing operation carried out in the row logical operation part 2413, it means that there is at least one object pixel contained in the received row. Where a value of 0 is outputted after the ORing operation, it means that there is no object pixel contained in the received row. The row shift part 2414 receives an output from the column shift part 2412 and shifts shape information of the received row, as shown in Figs. 6e and 6f, when the output from the row logical operation part 2413 has a value of 1. That is, the object pixels of the received row are shifted in such a fashion that they fill the BAB from the left border. Consequently, the output from the row shift part 2414 is indicative of an arrangement of object pixels in the form of Figs. 6e and 6f. This coincides with information indicative of positions where output coefficients of the shape-adaptive DCT are arranged. Since all the above-mentioned operations and procedures are carried out in the unit of bits because information being processed is binary information. Accordingly, all operations are very simple. The coefficient mask forming part may also be used in association with other types of shape-adaptive coding methods, in so far as it performs to form a shape information mask having the same arrangement as that of coefficients generated in the shape-adaptive coding.

In accordance with the present invention, the shape-adaptive scanning part 245 receives transform coefficients outputted from the quantization part 244 and carries out a scanning operation to arrange those transform coefficients in the form of a one-dimensional signal. For the arranging operation, the shape-adaptive scanning part 245 receives a control signal from the shape-adaptive scan control part 240. Based on the control signal, the shape-adaptive scanning part 245 skips segments containing no transform coefficient from the scanning operation, in order to exclude those segments from the one-dimensional array. In accordance with the present invention, therefore, it is possible to eliminate zeros unnecessarily inserted in the conventional scanning methods. This results in an improvement in coding efficiency.

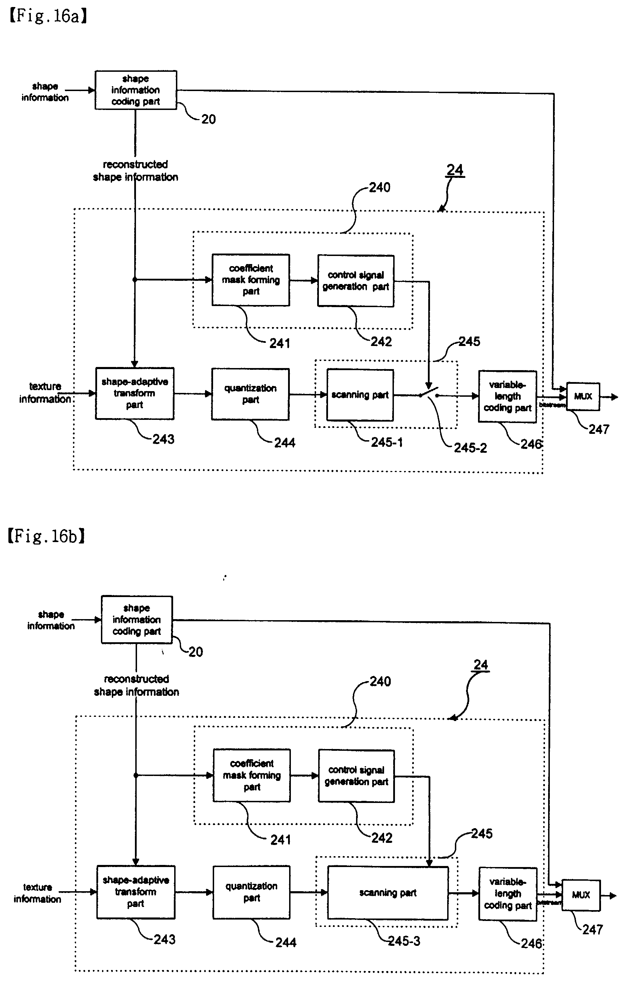

Referring to Figs. 16a and 16b, embodiments of the shape-adaptive scanning part 245 are illustrated, respectively. In the embodiment of Fig. 16a, the shape-adaptive scanning part 245 includes a scanning part 245-1 and a switching part 245-2. The scanning part 245-1 is configured to operate in the same scanning manner as in the conventional scanning method of Figs. 8a to 8c. The switching part 245-2 serves to carry out its switching operation in accordance with a control signal received from the shape-adaptive scan control part 240. Where the control signal applied to the switch is indicative of a segment containing no transform coefficient, the switching part 245-2 is switched off. The switching part 245-2 is also switched on when the control signal applied thereto is indicative of a segment containing a transform coefficient. In accordance with such an operation of the switching part 245-2 controlled in response to the control signal, the shape-adaptive scanning part 245 generates its output only for segments containing transform coefficients. This will be described in more detail in conjunction with Fig. 9c. Assuming that the scanning method used is a zig-zag scanning method as shown in Fig. 8a, the shape-adaptive scanning part 245 outputs X11, X12, X21, X31, X22, X13, X14, 0, 0, X41, X51, 0, 0, 0, X15, X16, 0, 0, 0, X52, and X71. The control signal generation part 242 of the shape-adaptive scan control part, which receives the transform coefficient position information as shown in Fig. 9a, scans all segments in the same order as in the zig-zag scanning carried out in the shape-adaptive scanning part 245 and in a simultaneous manner with the zig-zag scanning. When the control signal generation part 242 scans a segment containing a transform coefficient, it generates a control signal for switching on the switching part 245-2. The control signal generation part 242 also outputs a control signal for switching off the switching part 245-2 when it scans a segment containing no transform coefficient. Thus, the switching part 245-2 outputs X11, X12, X21, X31, X22, X13, X14, 0, X41, X51, 0, X15, X16, X52, and X71 while receiving inputs of X11, X12, X21, X31, X22, X13, X14, 0, 0, X41, X51, 0, 0, 0, X15, X16, 0, 0, 0, X52, and X71.

Although the shape-adaptive scanning part 245 of Fig. 16a has been described in conjunction with the zig-zag scanning method of Fig. 8a, it can operate for the scanning methods of Fig. 8b and 8c in accordance with the same principle as mentioned above.

On the other hand, the object-based image signal coding apparatus 245 according to the embodiment of Fig. 16b includes a scanning part 245-3 configured to perform a scanning operation in accordance with a new scanning scheme adapted to skip segments containing no transform coefficient without scanning those segments while basically using the conventional scanning method. Where this shape-adaptive scanning part basically operates in a zig-zag scanning fashion and receives the transform coefficient position information as shown in Fig. 9c, it carries out a scanning operation in accordance with a new scanning scheme shown in Fig. 9d, in response to a control signal applied thereto. The shape-adaptive scanning part 245 of Fig. 16b may also basically use the scanning scheme as shown in Fig. 8b or 8c. Thus, the scanning scheme intended in this embodiment may be determined in accordance with the input shape information and the basic scanning scheme used. Of course, both the embodiments of Figs. 16a and 16b provide the same result.

Although not shown in Figs. 14 and 16, the texture information coding part should include a part adapted to reconstruct an encoded texture information signal. Generally, this part carries out an inverse quantization procedure and an inverse transform procedure. The resultant reconstructed texture information signal is applied to the adder of Fig. 11.

Now, the operation of the object-based image signal coding apparatus according to the present invention will be described in detail. When a boundary block as shown in Fig. 5 is inputted at the input stage of a shape-adaptive transform part 243, it is processed by a shape-adaptive transform in the shape-adaptive transform part 243 which, in turn, outputs shape-adaptive transform coefficients. In this case, the texture information signal inputted to the shape-adaptive transform part 243 may be a prediction error signal as used in the case of Fig. 11. Alternatively, an input texture information signal may be inputted where the prediction error signal has a large value. The shape-adaptive transform part 243 also receives reconstructed shape information outputted from the shape information coding part 20 in order to determine which pixels correspond to object pixels. The shape-adaptive transform part 243 outputs transform coefficients corresponding in number to the object pixels. Where the transform coding used is a shape-adaptive DCT, the transform coefficients are arranged in a manner as described in conjunction with Figs. 6a to 6f. Referring to this example, it can be found that the transform coefficients outputted from the shape-adaptive transform part 243 have a different arrangement from the shape information inputted at the same part 243. Accordingly, it is necessary to change the arrangement of the input shape information so that it is identical to that of the transform coefficients. This arrangement change is carried out in the coefficient mask forming part 241 as described in above. The input of the coefficient mask forming part 241 is the input shape information whereas the output of the same part 241 is shape information having an arrangement identical to the arrangement of the transform coefficients outputted from the shape-adaptive transform part 243. That is, the coefficient mask forming part 241 forms a coefficient mask for determining whether or not the currently scanned segment contains an associated transform coefficient, as shown in Fig. 6f. The coefficient mask output from the coefficient mask forming part 241 is applied to the scan control signal generation part 242 via an output stage thereof. Based on such shape information, the scan control signal generation part 242 controls the shape-adaptive scanning part 245.

The transform coefficients from the shape-adaptive transform part 243 are applied to a quantization part 244 which, in turn, carries out a quantization for the received transform coefficients. The quantized transform coefficients are transmitted to the shape-adaptive scanning part 245 which, in turn, arranges the received transform coefficients in a one-dimensional signal. The transform coefficients arranged in a one-dimensionare applied to a variable-length coding (VLC) part 246 which, in turn, conducts a coding operation for the received transform coefficients, thereby outputting an associated bitstream.

a multiplexing part 247 receives a bitstream obtained after variable-length coding the transform coefficients and a shape information bitstream outputted from the shape information coding part and multiplexes those bitstreams together. The resultant signal is transmitted to the receiver.

In the case of the well-known scanning methods, a transform coefficient scanning operation is performed for the entire segment of a block, as shown in Figs. 8a to 8c. In the shape-adaptive transform, however, only the transform coefficients respectively associated with pixels included in the object region are transmitted. In this case, the arrangement of the transform coefficients outputted from the shape-adaptive transform part 243 or quantization part 244 is changed depending on the shape information. Accordingly, the shape-adaptive scan control part 242 generates a signal indicative of whether or not the currently scanned mask region corresponds to the transform coefficient region, based on the shape information outputted from the coefficient mask forming part 241, while conducting its scanning operation in the same manner as in the shape-adaptive scanning part 245, based on the shape information outputted from the coefficient mask forming part 241. As mentioned hereinbefore, the shape information outputted from the coefficient mask forming part 241 has the same arrangement as that of the transform coefficients outputted from the shape-adaptive transform part 243. Therefore, the scan control, which is carried out based on such shape information, makes it possible to effectively eliminate unnecessary information possibly generated in the shape-adaptive transform coding. Thus, there is an advantage of an improvement in coding efficiency.

The method for controlling a scanning operation based on reconstructed shape information encoded by the shape information coding part 20 in accordance with the present invention has the following advantages as compared to the conventional methods.

The formation of a coefficient mask is possible after the completion of the shape-adaptive coding process in accordance with the conventional methods. In accordance with the present invention, however, the formation of a coefficient mask can be carried out independently of and in parallel to the shape-adaptive coding process. That is, the coefficient mask formation can be carried out during the execution of the shape-adaptive coding process. Accordingly, it is unnecessary for the coefficient mask formation to be on standby until the shape-adaptive coding is completed.

In addition, an accurate coefficient mask can be formed in accordance with the present invention. In the conventional methods, the formation of a coefficient mask is carried out based on coefficients resulting from a shape-adaptive coding process. In most cases, the coefficient mask can be formed by appropriately sorting coefficients obtained from information contained in an input block. However, where there is no difference between the outputted coefficients and the other information contained in the input block, it is impossible to form an accurate coefficient mask. In accordance with the present invention, such a problem involved in the formation of a coefficient mask based on coefficients is eliminated because shape information is used.

Furthermore, it is possible to overcome the problem involved in the transmission of shape information with a large number of bits via a channel having a limited bandwidth because reconstructed shape information is used in accordance with the present invention. In other words, the problem, which occurs in the lossy coding process adapted to reduce the number of bits being generated, is eliminated. The lossy coding process is used in most shape information coding schemes as well as the CAE scheme. The lossy coding results in a difference between the input shape information and the shape information reconstructed at the decoding stage. This means that different definitions for object regions are used between the input shape information and the shape information reconstructed at the decoding stage. For this reason, it is necessary to carry out the shape-adaptive coding process based on reconstructed shape information in place of the input shape information. If the shape-adaptive coding operation is performed in the coding system using the input shape information, it is impossible to achieve a shape-adaptive decoding in the decoding system. This is because the decoding system can only have reconstructed shape information different from the input shape information.

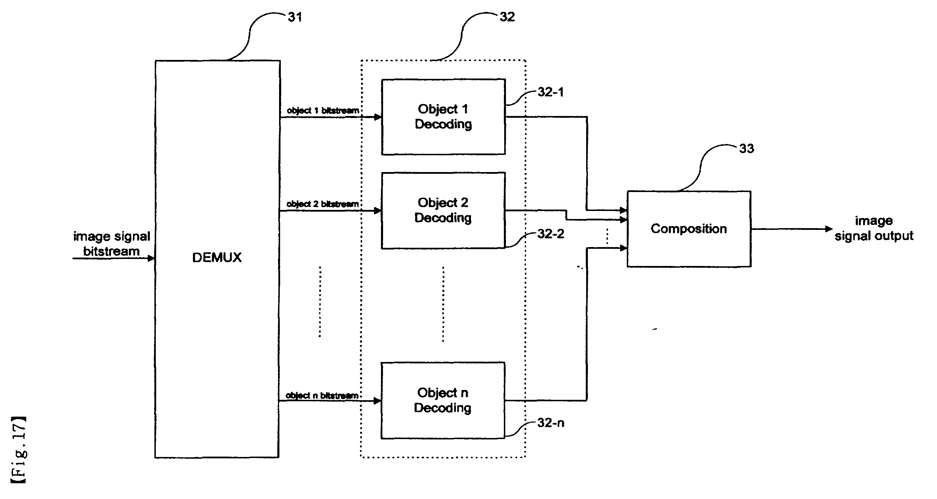

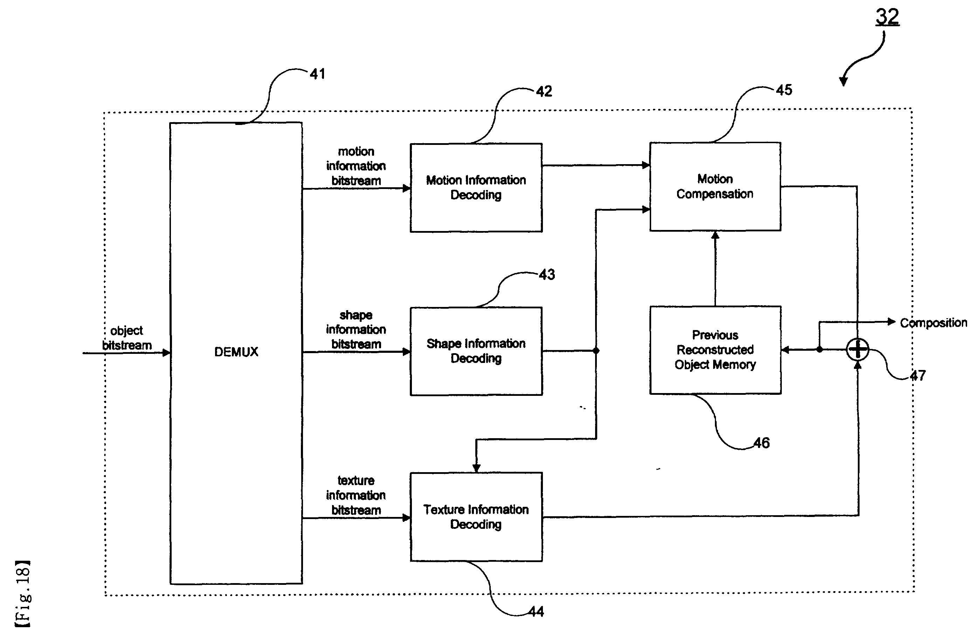

Figs. 17 and 18 illustrate an object-based image decoding system for shape-adaptive decoding of image signals in accordance with the present invention. Fig. 17 illustrates a block diagram schematically illustrating an object-based image decoding system according to the present invention. Abitstream, which is received in the object-based image decoding system, is divided into bitstreams respectively associated with objects via a demultiplexer (DMUX) 31. The resultant object bitstreams are decoded in an object decoding part 32 in association with objects, respectively. The resultant reconstructed object signals from the object decoder 32 are composed by a compositor 33, thereby generating a single reconstructed image signal.

Fig. 18 is a block diagram illustrating a detailed configuration of the object decoding part 32 according to the present invention. Although the object decoding part 32 is shown in Fig. 17 as consisting of a plurality of object decoding parts, it practically includes a single object decoding unit which repeatedly performs a decoding operation by n times (32-1, 32-2, ..., and 32-n) for n objects. The illustration of Fig. 17 is only to emphasize individual decoding operations of the object decoding part 32 for objects, a bitstream, which is received in the object decoding part 32 of Fig. 18, is divided into a motion information bitstream, a shape information bitstream, and a texture information bitstream via a demultiplexer (DEMUX) 41. The divided bitstreams are then applied to decoding parts 42 to 44, respectively. The shape information decoding part 43, which receives the shape information bitstream, generates reconstructed shape information. This reconstructed shape information is applied to the texture information decoding part 44. The reconstructed shape information is also applied to a motion compensation part 45. Thus, decoding is carried out for each object. That is, reconstruction of pixels only included in the object region is possible. The texture information decoding part 44 receives the texture information bitstream, thereby conducting a texture information decoding operation. In order to decode only the texture information associated with the object region, the texture information decoding part 44 also receives the reconstructed shape information from the shape information decoding part 43 and uses it upon decoding the texture information. The motion information decoding part 42 receives the motion information bitstream, thereby conducting a motion information decoding operation. The motion compensation part 45 carries out a motion compensated prediction, based on the motion information outputted from the motion information decoding part 42 and the previous texture information from a previous reconstructed object memory part 46. Of course, the motion compensated prediction is carried out in association with the object region. To this end, the reconstructed shape information outputted from the shape information decoding part 43 is also applied to the motion compensation part 45 so that it is used for the operation of the motion compensation part 45. This reconstructed shape information is identical to the reconstructed shape information outputted from the shape information coding part 20 of Fig. 14. A motion compensated prediction signal outputted from the motion compensation part 45 is added to the reconstructed texture information from the texture information decoding part 44 in an adder 47, thereby recovering the associated object. The recovered object is stored in the previous reconstructed object memory 46 so that it is subsequently used upon the decoding of the next frame. The recovered object is also applied to a compositor so that it is composed with other objects, thereby reproducing an image signal.

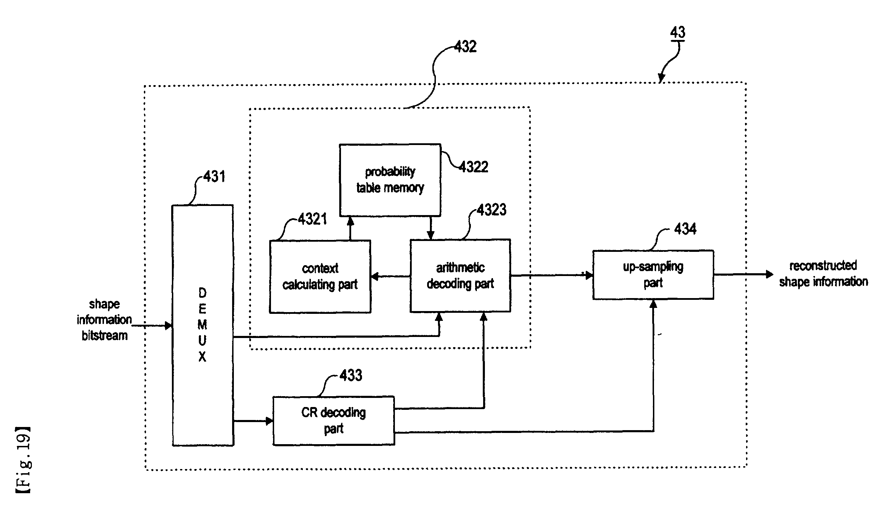

Fig. 19 is a block diagram illustrating the shape information decoding part (denoted by the reference numeral 43 in Fig. 18). As shown in Fig. 19, the shape information decoding part 43 includes a demultiplexer 431 for receiving a shape information bitstream and dividing the received shape information bitstream into a bitstream to be processed by an arithmetic decoding process and a CR information bitstream, a CR decoding part 433 for decoding the CR information bitstream, thereby outputting a CR, a CAE decoding part 432 for receiving the bitstream, to be processed by the arithmetic decoding process, from the demultiplexer 431 along with the CR from the CR decoding part 433, and arithmetically decoding a BAB having a size represented by the CR, thereby reconstructing the BAB, and an up-sampling part 434 for receiving the reconstructed BAB, and up-sampling the reconstructed BAB into a BAB having an original size.

The CAE decoding part 432 includes a context calculating part 4321 for receiving the pixel value of the reconstructed shape information, previously stored after being decoded, from an arithmetic decoding part 4323, thereby calculating a context, and a probability table memory 4322 for receiving the context from the context calculating part 4321, and outputting a probability associated with the received context. The arithmetic decoding part 4323, which is also included in the CAE decoding part 432, serves to arithmetically decode the bitstream received from the demultiplexer 431 by use of the probability table stored in the probability table memory 4322 while receiving the CR from the CR decoding part 433, thereby generating a reconstructed BAB having a size corresponding to the CR.

Now, the procedure of generating reconstructed shape information in the shape information decoding part 43 having the above-mentioned configuration will be described in detail. The demultiplexer 431 separates a CR information bitstream from a shape information bitstream received thereto and sends the CR information bitstream to the CR decoding part 433. The CR information bitstream is decoded in the CR decoding part 433. Thus, CR information is derived. This information is then inputted to both the arithmetic decoding part 4323 and the up-sampling part 434. Using the CR information, the arithmetic decoding part 4323 decodes pixels of a size corresponding to the CR information. For example, assuming that a 16x16 BAB size is used, the arithmetic decoding part 4323 decodes 256 shape information pixels when the CR information inputted thereto is indicative of a non-execution of down-sampling. Where the CR information is indicative of a 1/4 down-sampling, the arithmetic decoding part 4323 decodes 64 shape information pixels. The up-sampling part 434 outputs a reconstructed BAB having a 16x16 size. If the reconstructed BAB outputted from the arithmetic decoding part 4323 has a size smaller than the 16x16 size, for example, an 8x8 size, the up-sampling part 434 carries out a desired up-sampling operation. In this case, it should be noted that the reconstructed shape information outputted from this decoding system is identical to the reconstructed shape information used in the encoding system.

Where an inter CAE coding method or a vertex-based shape information coding method is used in place of the shape information coding method used in the case of Fig. 12, it is required to use an appropriate shape information decoder. The present invention is not limited by a specific shape information decoding method.

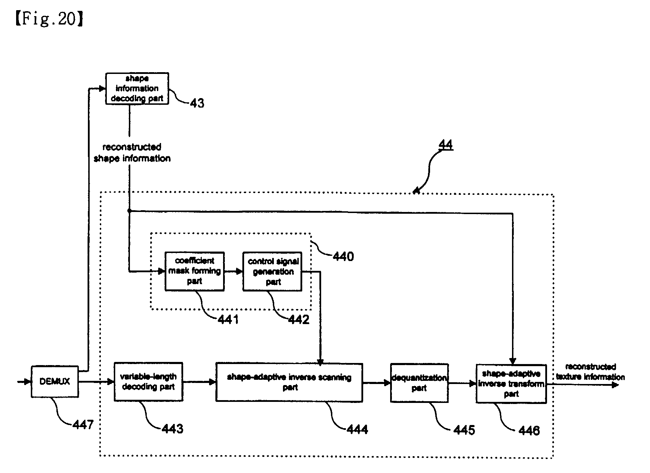

Fig. 20 is a block diagram illustrating an apparatus for shape-adaptive decoding of image signals in accordance with the present invention. This apparatus corresponds to the texture information decoding part 44 of Fig. 18. As shown in Fig. 20, the apparatus includes a shape-adaptive inverse scan control part 440 for forming a binary coefficient mask based on said reconstructed shape information received from said shape information decoding part 43, and generating an inverse scan control signal in accordance with the coefficient mask; and a shape-adaptive inverse scanning part 444 for performing an inverse scanning operation to arrange transform coefficients outputted from the variable-length decoding part in the form of a two-dimensional signal, based on said inverse scan control signal from said shape-adaptive inverse scan control part.

The shape-adaptive inverse scan control part 440 operates in the same manner as the shape-adaptive scan control part 240 of Fig. 14. That is, the shape-adaptive inverse scan control part 440 includes a binary coefficient mask forming part 441 adapted to receive said reconstructed shape information from said shape information decoding part and to form a shape-adaptive transform binary coefficient mask for sorting segments containing transform coefficients from segments containing no transform coefficient; and a control signal generation part 442 adapted to generate a skip signal for skipping segments containing no transform coefficient from a scan order in the scanning operation of said shape-adaptive inverse scanning part 444.

The shape-adaptive inverse scanning part 444 also receives transform coefficients outputted from a variable-length decoding part 443 and conducts an inverse scanning operation for arranging those transform coefficients in the form of a two-dimensional signal. During the inverse scanning operation, the shape-adaptive inverse scanning part 440 receives a control signal from the shape-adaptive inverse scan control part 440, in order to exclude segments containing no transform coefficient from the scan order, namely, to skip the segments. In accordance with the present invention, therefore, it is possible to reduce the number of zero coefficients unnecessarily inserted irrespective of non-existence of transform coefficients in the case of the conventional scanning methods. This results in an advantage of an improvement in coding efficiency.

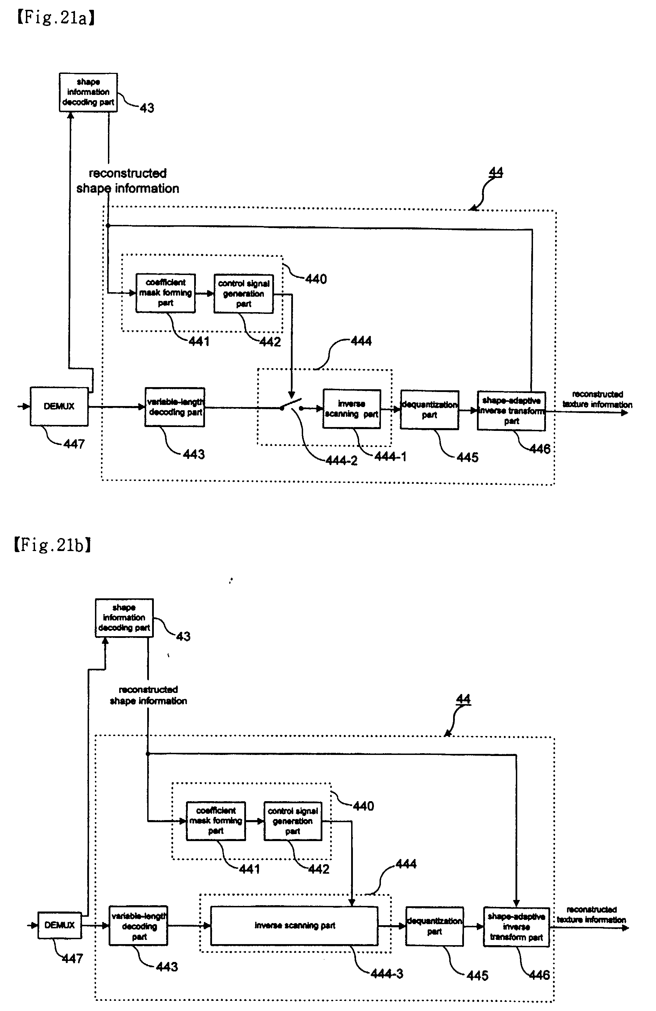

In accordance with an embodiment of the present invention shown in Fig. 21a, the shape-adaptive inverse scanning part 444 includes an inverse scanning part 444-1 and a switching part 444-2. The shape-adaptive inverse scanning part 444 is configured so that during its scanning of segments processed by the variable-length decoding, it switches off outputting of scanned transform coefficient values associated with segments containing no transform coefficient, based on a skip signal from the control signal generation part 442, so as to exclude those scanned transform coefficient values from a two-dimensional arrangement of decoded transform coefficient values. In accordance with another embodiment of the present invention shown in Fig. 21b, the shape-adaptive inverse scanning part 444 includes only an inverse scanning part 444-3. As shown in Fig. 21b, the shape-adaptive inverse scanning part 444 is configured so that during its scanning of segments, it excludes segments containing no transform coefficient from the scan order, thereby skipping them, based on a skip signal from the control signal generation part 442.

The operation of the object-based image decoding apparatus according to the present invention will now be described in conjunction with Fig. 20. In operation of the apparatus, the demultiplexer 447 receives an encoded signal, namely, a bitstream processed by a VLC process, via a transmission medium, and outputs a shape information bitstream and a texture information bitstream. The variable-length decoding part 443 receives the texture information bitstream, thereby outputting transform coefficients arranged in a one-dimensional array. The shape-adaptive inverse scan control part 440 has the same configuration as the shape-adaptive scan control part of Fig. 14. The coefficient mask forming part 441 outputs a coefficient mask for determining whether or not the currently scanned segment contains an associated transform coefficient, using reconstructed shape information received from the shape information decoding part 43. This information is applied to the control signal generation part 442 which, in turn, outputs a control signal indicative of which segments have no transform coefficient while scanning the entire segment in the same manner as in the shape-adaptive inverse scanning part 444. The shape-adaptive inverse scanning part 444 conducts a procedure for rearranging transform coefficients outputted from the variable-length decoding part 443. Thereafter, a de-quantization for the transform coefficients is carried out in a de-quantization part 445. The resultant transform coefficients are inversely transformed in a shape-adaptive inverse transform part 446, thereby reconstructing texture information.

The shape-adaptive inverse scanning procedure according to the present invention will be exemplarily described in conjunction with Fig. 9c. The variable-length decoding part 443 outputs X11, X12, X21, X31, X22, X13, X14, 0, X41, X51, 0, X15, X16, 0, X52, and X71 whereas the shape-adaptive inverse scanning part 444 generates outputs as shown in Fig. 9e. In Fig. 9e, the bright portions correspond to segments containing no transform coefficient. These segments are not subject to an object-based decoding. Even when these segments are filled with optional values, the decoding part is not influenced by them. The shape-adaptive inverse scanning part of Fig. 21a is configured to operate in the same scanning manner as in the conventional scanning method while using a switch controlled by a control signal. On the other hand, the shape-adaptive inverse scanning part of Fig. 21b uses a new inverse scanning scheme as shown in Fig. 9d. The inverse scanning procedure according to the present invention may be carried out using a zig-zag scanning scheme or other scanning schemes.

As apparent from the above description, the present invention provides object-based coding and decoding apparatuses and methods for image signals, wherein upon scanning shape-adaptive transform coefficients of blocks transformed in accordance with a shape-adaptive transform, only segments containing such shape-adaptive transform coefficients are scanned. In the scanning operation, segments containing no transform coefficient are skipped. As a result, it is possible to suppress transmission of unnecessary bits. Accordingly, there are redundant bits which can be used for an improvement in picture quality. This results in an improvement in the quality of image services under the same bit rate transmission or storage media. Furthermore, the formation of a coefficient mask can be carried out in parallel to the shape-adaptive coding process. That is, the coefficient mask formation can be carried out during the execution of the shape-adaptive coding process. Accordingly, a decoding complexity is reduced.

In addition, the formation of the coefficient mask is carried out based on reconstructed shape information in accordance with the present invention. Accordingly, it is possible to form a more accurate coefficient mask by using a reconstructed shape information as compared to the conventional method in which the formation of the coefficient mask is carried out based on coefficient. In addition, it is possible to overcome the problem encountered in the transmission of shape information with a large number of bits via a channel having a limited bandwidth.

Although the preferred embodiments of the invention have been disclosed for illustrative purposes, those skilled in the art will appreciate that various modifications, additions and substitutions are possible, without departing from the scope and spirit of the invention as disclosed in the accompanying claims.

**Claims**

1. An object-based coding apparatus for image signals including: a shape information coding part for encoding shape information contained in an input image signal, and outputting a bitstream of said encoded shape information to a multiplexing part, said shape information coding part also outputting reconstructed shape information recovered during said encoding process to a texture information coding part; said texture information coding part for encoding texture information of segments of said input image signal associated with objects, based on said reconstructed shape information received from said shape information coding part, and sending said encoded texture information to said multiplexing part; and said multiplexing part for multiplexing said encoded shape information bitstream received from said shape information coding part with a bitstream of said encoded texture information received from said texture information coding part and sending said multiplexed bitstreams to the next receiver, wherein said texture information coding part comprises:

   a shape-adaptive transform part for carrying out a shape-adaptive transform for said texture information of said input image signal, based on said reconstructed shape information outputted from said shape information coding part;
   a shape-adaptive scan control part for forming a binary coefficient mask having the same transform coefficient distribution as that of an output signal from said shape-adaptive transform part, based on said reconstructed shape information received from said shape information coding part, and generating a scan control signal in accordance with existence or non-existence of a transform coefficient determined based on said binary coefficient mask; and
   a shape-adaptive scanning part for carrying out a scanning operation for said output signal from said shape-adaptive transform part, based on said control signal from said shape-adaptive scan control part, thereby outputting an encoded bitstream to said multiplexing part.

2. The object-based coding apparatus for image signals in accordance with Claim 1, wherein said shape-adaptive scan control part comprises:

   a coefficient mask forming part adapted to form a binary coefficient mask for sorting segments containing transform coefficients from segments containing no transform coefficient; and
   a control signal generation part adapted to generate a skip signal for skipping segments containing no transform coefficient from the scanning operation of said shape-adaptive scanning part.

3. The object-based coding apparatus for image signals in accordance with Claim 2, wherein said coefficient mask forming part comprises:

a column logical operation part for determining whether or not each column of a binary alpha block contains at least one object pixel by a logical operation based on the reconstructed shape information from said shape information coding part, and outputting the result of said determination;

a column shift part for upwardly shifting pixels associated with each of columns, containing at least one object pixel of said binary alpha block, to an upper border of said binary alpha block based on the determination result outputted from said column logical operation part;

a row logical operation part for determining whether or not each row of said binary alpha block contains at least one object pixel by a logical operation based on the received output from said column shift part, and outputting the result of said determination; and

a row shift part for receiving said signal outputted from said column shift part, thereby left-shifting pixels associated with each of rows, containing at least one object pixel out of row-based shifted binary alpha blocks, based on said determination result outputted from said row logical operation part, to a left border of said binary alpha block, and thus forming a final binary coefficient mask.

4. The object-based coding apparatus for image signals in accordance with Claim 2, wherein said shape-adaptive scanning part is configured to carry out a scanning operation for transform coefficients, based on said skip signal from said control signal generation part, while skipping segments containing no transform coefficient.

5. The object-based coding apparatus for image signals in accordance with Claim 2, wherein said shape-adaptive scanning part comprises:

a scanning part adapted to scan the entire segment including segments containing shape-adaptive transform coefficients and segments containing no transform coefficient, but respectively filled with coefficients of a predetermined value; and

a switching part adapted to receive an output signal from said scanning part and to switch off said output signal from said scanning part, based on said skip signal from said control signal generation part, when said output signal is associated with that of said segments containing no transform coefficient.

6. The object-based coding apparatus for image signals in accordance with Claim 1, wherein said shape-adaptive scanning part is a zig-zag scan type shape-adaptive scanning part or an alternate scan type shape-adaptive scanning part.

7. The object-based coding apparatus for image signals in accordance with Claim 1, further comprising:

a quantization part provided between said shape-adaptive transform part and said shape-adaptive scanning part and adapted to quantize transform coefficients outputted from said shape-adaptive transform part; and

a variable-length coding part provided downstream from said shape-adaptive scanning part and adapted to perform a variable-length coding operation in accordance with a generation probability of transform coefficients generated in said scanning operation.

8. An object-based coding method for image signals carried out in an object-based image signal coding apparatus including: a shape information coding part for encoding shape information contained in an input image signal, outputting a bitstream of said encoded shape information to a multiplexing part, said shape information coding part also outputting reconstructed shape information recovered during said encoding process to a texture information coding part; said texture information coding part for encoding texture information contained in said input image signal, based on said reconstructed shape information received from said shape information coding part, said texture information coding part including a shape-adaptive transform part for carrying out a shape-adaptive transform for said texture information, a shape-adaptive scan control part including a coefficient mask forming part and a a control signal generation part, and a shape-adaptive scanning part; and said multiplexing part for multiplexing said shape information bitstream received from said shape information coding part with a texture information bitstream received from said texture information coding part, comprising the steps of:

forming, in said shape-adaptive scan control part and based on said reconstructed shape information outputted from said shape information coding part, a binary coefficient mask having the same transform coefficient distribution as that of an output signal from said shape-adaptive scan control part and sorting segments containing transform coefficients from segments containing no transform coefficients, thereby generating a binary coefficient mask value for said segments containing transform coefficients;

performing, in said shape-adaptive transform part, a shape-adaptive transform for said texture information contained in said image signal, based on said reconstructed shape information outputted from said shape information coding part; and

performing, in said shape-adaptive scanning part, a scanning operation for transform coefficients outputted from said shape-adaptive transform part, based on generation or non-generation of said binary coefficient mask value from said shape-adaptive scan control part, in such a fashion that said scanning operation is skipped for said segments containing no transform coefficient.

9. An object-based decoding apparatus for image signals including a demultiplexing part for demultiplexing an object bitstream, transmitted thereto after being encoded, into a shape information bitstream and a texture information bitstream, and sending said bitstreams to a shape information decoding part and a texture information decoding part, respectively; said shape information decoding part for decoding said shape information bitstream received from said demultiplexing part, thereby generating reconstructed shape information, and sending said reconstructed shape information to said texture information decoding part for an object-based decoding process in said texture information decoding part; and said texture information decoding part for decoding said texture information bitstream received from said demultiplexing part, based on said reconstructed shape information received from said shape information decoding part, wherein said texture information decoding part comprises:

a shape-adaptive inverse scan control part for forming a binary coefficient mask based on said reconstructed shape information received from said shape information decoding part, and generating an inverse scan control signal in accordance with existence or non-existence of a transform coefficient based on said binary coefficient mask; and

a shape-adaptive inverse scanning part for performing an inverse scanning operation to arrange transform coefficients of texture information contained in said transmitted object bitstream in the form of a two-dimensional signal, based on said inverse scan control signal from said shape-adaptive inverse scan control part; and

a shape-adaptive inverse transform part for carrying out a shape-adaptive inverse transform for said inversely-scanned transform coefficients outputted from said shape-adaptive inverse scanning part, based on said reconstructed shape information outputted from said shape information decoding part, thereby reconstructing texture information of an original image signal.

10. The object-based decoding apparatus for image signals in accordance with Claim 9, wherein said shape-adaptive inverse scan control part comprises:

a binary coefficient mask forming part for receiving said reconstructed shape information from said shape information decoding part, thereby forming a shape-adaptive transform binary coefficient mask for sorting segments containing transform coefficients from segments containing no transform coefficient; and

a control signal generation part for generating a skip signal for skipping segments containing no transform coefficient from an inverse scan order in said inverse scanning operation of said shape-adaptive inverse scanning part.

11. The object-based decoding apparatus for image signals in accordance with Claim 10, wherein said shape-adaptive inverse scanning part is configured to carry out an inverse scanning operation for said transform coefficients, based on said skip signal from said control signal generation part, while skipping segments containing no transform coefficient.

12. The object-based decoding apparatus for image signals in accordance with Claim 10, wherein said shape-adaptive inverse scanning part comprises:

a switching part for receiving said transform coefficients of said texture information contained in said object bitstream processed by a variable-length decoding process, and switching off outputting of those of said transform coefficients associated with said segments containing no transform coefficient, based on said skip signal from said control signal generation part; and

an inverse scanning part for scanning the entire segment including segments containing shape-adaptive transform coefficients outputted from said switching part and segments containing no transform coefficient, but respectively filled with coefficients of a predetermined value.

13. The object-based decoding apparatus for image signals in accordance with Claim 9, wherein said shape-adaptive inverse scanning part is a zig-zag scan type shape-adaptive inverse scanning part or an alternate scan type shape-adaptive inverse scanning part.

**14.** The object-based decoding apparatus for image signals in accordance with Claim 9, further comprising:

> a variable-length decoding part provided upstream from said shape-adaptive inverse scanning part and adapted to receive said texture information contained in said object bitstream, thereby outputting transform coefficients arranged in a one-dimensional array; and
> a dequantization part provided between said shape-adaptive inverse scanning part and said shape-adaptive inverse transform part and adapted to de-quantize said inversely-scanned transform coefficients.

**15.** An object-based decoding method for image signals carried out in an object-based image signal decoding apparatus including: a demultiplexing part for demultiplexing an object, bitstream transmitted thereto after being encoded, into a shape information bitstream and a texture information bitstream, and sending said bitstreams to a shape information decoding part and a texture information decoding part, respectively; said shape information decoding part for decoding said shape information bitstream received from said demultiplexing part, thereby generating reconstructed shape information, and sending said reconstructed shape information to said texture information decoding part for an object-based decoding process in said texture information decoding part; and said texture information decoding part for decoding said texture information bitstream received from said demultiplexing part, based on said reconstructed shape information received from said shape information decoding part, said texture information decoding part including a shape-adaptive inverse scan control part, a shape-adaptive inverse scanning part, and a shape-adaptive inverse transform part, comprising the steps of:

> forming, in said shape-adaptive inverse scan control part and based on said reconstructed shape information outputted from said shape information decoding part, a binary coefficient mask adapted to sort segments containing transform coefficients from segments containing no transform coefficients, thereby generating a binary coefficient mask value for said segments containing transform coefficients;
> performing, in said shape-adaptive inverse scanning part, an inverse scanning operation for transform coefficients of said text information bitstream outputted from said demultiplexing part, in order to decode said text information bitstream, based on generation or non-generation of said binary coefficient mask value from said shape-adaptive inverse scan control part, in such a fashion that said scanning operation is skipped for said segments containing no transform coefficient; and
> performing, in said shape-adaptive inverse transform part, a shape-adaptive inverse transform for said inversely-scanned transform coefficients outputted from said shape-adaptive inverse scanning part, based on said reconstructed shape information outputted from said shape information decoding part, thereby reconstructing texture information of an original image signal.

【Fig.1】

【Fig.2】

【Fig.3】

| C9 | C8 | C7 |
|----|----|----|

| C6 | C5 | C4 | C3 | C2 |
|----|----|----|----|----|

| C1 | C0 | Cc |
|----|----|----|

【Fig.4】

【Fig.5】

【Fig.6】

(a)

(b)

(c)

(d)

(e)

(f)

【Fig.7a】

shape
information → 20

texture
information → 10 → 11 → 12 → 13 → MUX

24

PRIOR ART

【Fig.7b】

100

Shape
information → 10

110 → 120

11 → 12 / 210 → 13 → MUX

200

PRIOR ART

【Fig.8】

| 0 | 1 | 5 | 6 | 14 | 15 | 27 | 28 |
|---|---|---|---|---|---|---|---|
| 2 | 4 | 7 | 13 | 16 | 26 | 29 | 42 |
| 3 | 8 | 12 | 17 | 25 | 30 | 41 | 43 |
| 9 | 11 | 18 | 24 | 31 | 40 | 44 | 53 |
| 10 | 19 | 23 | 32 | 39 | 45 | 52 | 54 |
| 20 | 22 | 33 | 38 | 46 | 51 | 55 | 60 |
| 21 | 34 | 37 | 47 | 50 | 56 | 59 | 61 |
| 35 | 36 | 48 | 49 | 57 | 58 | 62 | 63 |

(a)

| 0 | 4 | 6 | 20 | 22 | 36 | 38 | 52 |
|---|---|---|---|---|---|---|---|
| 1 | 5 | 7 | 21 | 23 | 37 | 39 | 53 |
| 2 | 8 | 19 | 24 | 34 | 40 | 50 | 54 |
| 3 | 9 | 18 | 25 | 35 | 41 | 51 | 55 |
| 10 | 17 | 26 | 30 | 42 | 46 | 56 | 60 |
| 11 | 16 | 27 | 31 | 43 | 47 | 57 | 61 |
| 12 | 15 | 28 | 32 | 44 | 48 | 58 | 62 |
| 13 | 14 | 29 | 33 | 45 | 49 | 59 | 63 |

(b)

| 0 | 1 | 2 | 3 | 10 | 11 | 12 | 13 |
|---|---|---|---|---|---|---|---|
| 4 | 5 | 8 | 9 | 17 | 16 | 15 | 14 |
| 6 | 7 | 19 | 18 | 26 | 27 | 28 | 29 |
| 20 | 21 | 24 | 25 | 30 | 31 | 32 | 33 |
| 22 | 23 | 34 | 35 | 42 | 43 | 44 | 45 |
| 36 | 37 | 40 | 41 | 46 | 47 | 48 | 49 |
| 38 | 39 | 50 | 51 | 56 | 57 | 58 | 59 |
| 52 | 53 | 54 | 55 | 60 | 61 | 62 | 63 |

(c)

【Fig.9】

| X11 | X12 | X13 | X14 | X15 | X16 | 0 | 0 |
|-----|-----|-----|-----|-----|-----|---|---|
| X21 | X22 | 0 | 0 | 0 | 0 | 0 | 0 |
| X31 | X32 | 0 | 0 | 0 | 0 | 0 | 0 |
| X41 | X42 | 0 | 0 | 0 | 0 | 0 | 0 |
| X51 | X52 | 0 | 0 | 0 | 0 | 0 | 0 |
| X61 | 0 | 0 | 0 | 0 | 0 | 0 | 0 |
| X71 | 0 | 0 | 0 | 0 | 0 | 0 | 0 |
| 0 | 0 | 0 | 0 | 0 | 0 | 0 | 0 |

(a)

| X11 | X12 | X13 | X14 | X15 | X16 | | |
|-----|-----|-----|-----|-----|-----|---|---|
| X21 | X22 | 0 | 0 | 0 | | | |
| X31 | X52 | 0 | 0 | | | | |
| X41 | X42 | 0 | | | | | |
| X51 | X52 | | | | | | |
| X61 | | | | | | | |
| X71 | | | | | | | |
| | | | | | | | |

(b)

| X11 | X12 | X13 | X14 | X15 | X16 | | |
|-----|-----|-----|-----|-----|-----|---|---|
| X21 | X22 | 0 | 0 | 0 | | | |
| X31 | | 0 | 0 | | | | |
| X41 | | 0 | | | | | |
| X51 | X52 | | | | | | |
| X61 | | | | | | | |
| X71 | | | | | | | |
| | | | | | | | |

(c)

| 0 | | 5 | 8 | 11 | 12 | | |
|---|---|---|---|----|----|---|---|
| 2 | | | | | | | |
| 3 | | | | | | | |
| 8 | 10 | | | | | | |
| 9 | 13 | | | | | | |
| 14 | | | | | | | |
| 15 | | | | | | | |
| | | | | | | | |

(d)

| X11 | X12 | X13 | X14 | X15 | X16 | | |
|-----|-----|-----|-----|-----|-----|---|---|
| X21 | X22 | | | | | | |
| X31 | 70 | | | | | | |
| X41 | 10 | | | | | | |
| X51 | X52 | | | | | | |
| X61 | | | | | | | |
| X71 | | | | | | | |
| | | | | | | | |

(e)

【Fig.10】

【Fig.11】

【Fig.12】

【Fig.13】

(a)

(b)

(c)

(d)

【Fig.14】

【Fig.15】

【Fig.16a】

【Fig.16b】

【Fig.17】

[Fig. 18]

EP 1 021 043 A2

【Fig.19】

【Fig.20】

【Fig.21a】

【Fig.21b】